(19)

**Europäisches Patentamt**
**European Patent Office**
**Office européen des brevets**

(11)  **EP 4 397 395 A1**

(12)  **EUROPEAN PATENT APPLICATION**
published in accordance with Art. 153(4) EPC

(43) Date of publication:
**10.07.2024 Bulletin 2024/28**

(21) Application number: **22864651.9**

(22) Date of filing: **31.08.2022**

(51) International Patent Classification (IPC):
**B01D 61/00** (2006.01)    **B01D 63/00** (2006.01)
**B01D 63/02** (2006.01)    **B01D 63/06** (2006.01)
**B01D 69/00** (2006.01)    **B01D 69/02** (2006.01)
**B01D 69/04** (2006.01)    **B01D 69/06** (2006.01)
**B01D 69/08** (2006.01)    **B01D 69/10** (2006.01)
**B01D 69/12** (2006.01)    **B01D 71/16** (2006.01)
**B01D 71/34** (2006.01)    **B01D 71/36** (2006.01)
**B01D 71/38** (2006.01)    **B01D 71/42** (2006.01)
**B01D 71/52** (2006.01)    **B01D 71/56** (2006.01)
**B01D 71/58** (2006.01)    **B01D 71/60** (2006.01)
**B01D 71/62** (2006.01)

(52) Cooperative Patent Classification (CPC):
**B01D 61/00; B01D 63/00; B01D 63/02;**
**B01D 63/06; B01D 69/00; B01D 69/02;**
**B01D 69/04; B01D 69/06; B01D 69/08;**
**B01D 69/10; B01D 69/12; B01D 71/16;**
**B01D 71/34; B01D 71/36; B01D 71/38;**    (Cont.)

(86) International application number:
**PCT/JP2022/032842**

(87) International publication number:
**WO 2023/033069 (09.03.2023 Gazette 2023/10)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **02.09.2021   JP 2021143396**
**02.09.2021   JP 2021143386**
**31.05.2022   JP 2022088957**

(71) Applicant: **Asahi Kasei Kabushiki Kaisha**
**Tokyo 1000006 (JP)**

(72) Inventors:
• **KATAYAMA, Yuji**
**Tokyo 100-0006 (JP)**
• **MIKAWA, Masato**
**Tokyo 100-0006 (JP)**
• **OSAKI, Takahiro**
**Tokyo 100-0006 (JP)**

(74) Representative: **D Young & Co LLP**
**3 Noble Street**
**London EC2V 7BQ (GB)**

(54)  **CONCENTRATION METHOD FOR ANALYSIS SOLUTION USING POSITIVE OSMOSIS MEMBRANE, AND ANALYSIS METHOD**

(57)    The present invention is a concentration method for concentrating, before performing analysis using an analysis device, an analysis solution that includes an analysis solute and an analysis solvent. The concentration method is based on forward osmosis in which, using a concentration device, the analysis solution and the induction solution are brought into mutual contact via a forward osmosis membrane so that the analysis solvent within the analysis solution is removed by being allowed to pass through the forward osmosis membrane and be transferred into the induction solvent. The concentration device includes: a forward osmosis membrane module including the forward osmosis membrane; an analysis solution tank; analysis solution feed piping; an induction solution tank; and induction solution feed piping. The total of the capacity of an analysis solution fluid flow section of the forward osmosis membrane module and the capacity of the analysis solution feed piping is 500 mL or

**(Cont. next page)**

less. The concentration of the analysis solute in the analysis solution is 0.01 ppm or less, and the concentration of the analysis solute in the analysis solution after concentration is 0.02 ppm or greater.

Fig. 2

(52) Cooperative Patent Classification (CPC): (Cont.)
B01D 71/42; B01D 71/52; B01D 71/56;
B01D 71/58; B01D 71/60; B01D 71/62;
B01D 71/64; B01D 71/68; B01D 71/72;
B01D 71/76; B01D 71/82; G01N 1/10;
G01N 1/40; G01N 30/06

**Description**

FIELD

The present invention relates to a concentration method for concentrating an analysis solution prior to analysis by means of an analysis device, and an analysis method for analyzing an analysis solution concentrated by this concentration method.

Various analyses such as measurement of trace substances present in the environment such as rivers, oceans, water supplies, and sewage; utility in factories such as quality inspection, verification of equipment after cleaning (validation), and confirmation of containment technology (validation); and water quality tests and component tests in fields such as fishing and agriculture; and clinical tests using blood and urine are carried out.

During analysis, if the concentration of the analysis solute contained in the analysis solution is low, it is necessary to pretreat (for example, concentrate) the sample to increase the concentration of analysis solute in the sample before analysis.

Regarding pretreatment of analysis samples, concentration methods using solid-phase extraction, separation membranes, and the like are known as concentration methods for increasing the concentration of an analysis solute while avoiding denaturation and dissipation.

The solid phase extraction method is a concentration method which involves adsorbing the analysis solute onto an adsorbent such as an ion exchange resin and then eluting it using an appropriate organic solvent. Since this method requires a plurality of steps, the operation is complicated.

As concentration methods using separation membranes, for example, methods using ultrafiltration membranes, nanofiltration membranes, reverse osmosis membranes, and forward osmosis membranes are known, and are technologies which enable concentration using a simple method of directly concentrating the analysis solution.

Concentration using an ultrafiltration membrane is a technology that uses differences in molecular weight to separate substances via sieving. Specifically, components larger than a molecular weight cutoff of the ultrafiltration membrane do not pass through the membrane and are retained in the analysis solution, but the solvent passes through the membrane and is separated, thereby concentrating the analysis solution. This method is effective, for example, for concentrating an analysis solution containing large molecules such as proteins as an analysis solute, and does not require heating of the sample, thereby avoiding denaturation of the analysis solute (Patent Literature 1).

In nanofiltration membranes, the solvent in the analysis solution can permeate at the molecular level, and using this, the analysis solution can be concentrated without heating.

Similarly to nanofiltration membranes, in reverse osmosis membranes and forward osmosis membranes, the solvent in the analysis solution can also permeate at the molecular level. Patent Literature 2 discloses a technology in which an analysis solution is introduced into a two-stage reverse osmosis membrane device connected in series and concentrated. Patent Literature 3 discloses a technology in which an analysis water (analysis solution) is concentrated by contacting the analysis water with a highly osmotic substance via a semi-permeable membrane and transferring the water in the analysis water to the highly osmotic substance.

[CITATION LIST]

[PATENT LITERATURE]

[PTL 1] WO 2013/170977
[PTL 2] Japanese Unexamined Patent Publication (Kokai) No. 2004-077299
[PTL 3] Japanese Unexamined Patent Publication (Kokai) No. 2009-092564

SUMMARY

[TECHNICAL PROBLEM]

As described above, the use of a separation membrane makes it possible to concentrate an analysis solution in a simple and non-heating manner.

However, in the technology using an ultrafiltration membrane in Patent Literature 1, since analysis solute having a molecular weight cut-off less than that of the membrane passes through the membrane, there is a certain limit to the type of analysis solution which can be concentrated by this method.

The technology using a reverse osmosis membrane described in Patent Literature 2 requires high pressure as the driving force for concentration. Thus, problems such as sticking of the analysis solute to the membrane due to pressurization in the analysis solution and contamination of the analysis solution due to leakage from rotating parts of the pressure pump occur.

In this regard, according to the technology of Patent Literature 3, the driving force of the concentration is the osmotic pressure difference between the analysis solution and the high osmotic pressure substance, and high pressure is not required for driving. Thus, problems caused by the sticking of the analysis solute to the membrane due to pressurization and the pressurizing pump are improved.

However, in Patent Literature 3, the relationship between the "theoretical concentration magnification" (herein also referred to as "volume reduction rate") calculated from the amount of decrease in the volume of the analysis solution after concentration, and the "analysis solute concentration magnification" (also referred to herein as "sensitivity improvement rate") calculated from the concentration of the analysis solute in the analysis solution after concentration are not considered.

In so-called "pre-concentration", in which the analysis solution is concentrated before analysis so that the analysis solute concentration is higher than a predetermined concentration, the lower the concentration of the analysis solute in the analysis solution before concentration, the greater the influence of loss of the analysis solute during the concentration process tends to increase, and thus, the discrepancy between the "theoretical concentration magnification" and the "analysis solute concentration magnification" tends to increase.

Patent Literature 3 also does not consider the case where the amount of analysis solution is small. According to the technology of Patent Literature 3, when the amount of analysis solution is small, there is a large loss of analysis solute during the concentration process, whereby it is difficult to carry out effective concentration.

Thus, with conventional technology, when the analysis solution is small, there has been a problem in that it is difficult to suppress the loss of analysis solute during the concentration process and to carry out effective concentration without deteriorating the components in the analysis solution.

The present invention has been made based on the above circumstances.

Therefore, an object of the present invention, first, is to provide a concentration method in which the discrepancy between the "theoretical concentration magnification" and the "analysis solute concentration magnification" is suppressed in pre-concentration, as well as an analysis method for an analysis solution, comprising this concentration method.

An object of the present invention, second, is to provide a concentration method with which the loss of analysis solute during the concentration process is suppressed and which enables effective concentration without deterioration of the components in the analysis solution, even when the amount of the analysis solution is small, as well as an analysis method of the analysis solution, comprising this concentration method.

[SOLUTION TO PROBLEM]

The embodiments of the present invention, which can achieve the objects described above, are as described below.

<<Aspect 1>>

A concentration method for concentrating an analysis solution containing an analysis solute and an analysis solvent prior to analysis by means of an analysis device, wherein the concentration method is:

a concentration method by means of a forward osmosis method, in which the analysis solution and a draw solution are brought into contact with each other via a forward osmosis membrane, and the analysis solvent in the analysis solution is removed by passing through the forward osmosis membrane and moving into the drawing solvent, using a concentration device comprising a forward osmosis membrane module including a forward osmosis membrane, an analysis solution tank, an analysis solution feed piping, a draw solution tank, and a draw solution feed piping, a total of a volume of an analysis solution passage part of the forward osmosis membrane module and a volume of the analysis solution feed piping is 500 mL or less, and a concentration of the analysis solute in the analysis solution is 0.01 ppm or less, and the concentration of the analysis solute in the analysis solution after concentration is 0.02 ppm or more.

<<Aspect 2>>

The concentration method according to Aspect 1, wherein an effective membrane area M of the forward osmosis membrane is 0.1 cm$^2$ to 0.20 m$^2$.

<<Aspect 3>>

A concentration method for concentrating an analysis solution containing an analysis solute and an analysis solvent prior to analysis by means of an analysis device, wherein the concentration method is:

a concentration method by means of a forward osmosis method, in which the analysis solution and a draw solution are brought into contact with each other via a forward osmosis membrane, and the analysis solvent in the analysis solution is removed by passing through the forward osmosis membrane and moving into the drawing solvent, the analysis solution is not recycled during concentration, and an amount Vf of the analysis solution used in the concentration method is 0.01 mL to 50 mL.

<<Aspect 4>>

The concentration method according to Aspect 3, wherein a ratio (Vf/M) of the amount Vf (L) of the analysis solution to the effective membrane area M ($m^2$) of the forward osmosis membrane is 0.01 $L/m^2$ to less than 200 $L/m^2$.

<<Aspect 5>>

The concentration method according to Aspect 3, wherein the effective membrane area M of the forward osmosis membrane is 0.001 $cm^2$ to 500 $cm^2$.

<<Aspect 6>>

The concentration method according to Aspect 3, wherein a viscosity of the analysis solution is less than 5,000 mPa·sec.

<<Aspect 7>>

The concentration method according to Aspect 3, wherein in a state in which the forward osmosis membrane having an effective membrane area of M ($m^2$) is brought into contact with a Brilliant Blue R aqueous solution Vr (L) having a concentration of 10 ppm under the condition of Vr/M = 1.8 $L/m^2$, after standing at room temperature (25°C) for 24 hours, an amount of Brilliant Blue R contained in recovered Brilliant Blue R aqueous solution is 80% or more of the amount of Brilliant Blue R contained in the Brilliant Blue R aqueous solution prior to contact with the forward osmosis membrane.

<<Aspect 8>>

The concentration method according to any one of Aspects 1 to 7, wherein the forward osmosis membrane is a membrane containing one or more selected from the group consisting of polyethersulfone, polysulfone, polyketone, polyetheretherketone, polyphenylene ether, polyvinylidene fluoride, polyacrylonitrile, polyethylene, polyimine, polyimide, polybenzoxazole, polybenzimidazole, sulfonated tetrafluoroethylene, cellulose acetate, and polyamide.

<<Aspect 9>>

The concentration method according to any one of Aspects 1 to 7, wherein the forward osmosis membrane is a composite membrane comprising a porous support layer and a separation active layer on one or both sides of the porous support layer.

<<Aspect 10>>

The concentration method according to Aspect 9, wherein the porous support layer has a porosity of 30% or more.

<<Aspect 11>>

The concentration method according to Aspect 9, wherein the separation active layer is a layer containing a polyamide.

<<Aspect 12>>

The concentration method according to any one of Aspects 1 to 7, wherein the forward osmosis membrane has a hollow fiber shape, a tubular shape, or a flat membrane shape.

<<Aspect 13>>

The concentration method according to Aspect 12, wherein the hollow fiber or tubular forward osmosis membrane has an inner diameter of 20 $\mu$m to 5,000 $\mu$m.

<<Aspect 14>>

The concentration method according to any one of Aspects 1 to 7, wherein the forward osmosis membrane has a hollow fiber or tubular shape, and has a separation active layer on the inner surface of the hollow fiber or tubular porous support layer.

<<Aspect 15>>

The concentration method according to Aspect 14, wherein the analysis solution passes through or is arranged in an inner space of the hollow fiber or tubular forward osmosis membrane, and the draw solution passes through or is arranged outside the hollow fiber or tubular forward osmosis membrane.

<<Aspect 16>>

The concentration method according to any one of Aspects 1 to 7, wherein the forward osmosis membrane has a flat membrane shape and has a separation active layer on one surface of the flat porous support layer.

<<Aspect 17>>

The concentration method according to Aspect 16, wherein the analysis solution passes through or is arranged on the separation active layer side of the flat forward osmosis membrane, and the draw solution passes through or is arranged on the porous support layer side of the forward osmosis membrane.

<<Aspect 18>>

The concentration method according to any one of Aspects 1 to 7, wherein the draw solution is a solution containing one or more selected from the group consisting of salts, organic acids, sugars, alcohols, glycols, organic polymers, and organic solvents.

<<Aspect 19>>

The concentration method according to Aspect 1 or 2, wherein a sensitivity improvement rate represented by a ratio of the concentration of the analysis solute contained in the analysis solution after concentration to the concentration of the analysis solute contained in the analysis solution before concentration is 2.0 to less than 2,000-fold.

<<Aspect 20>>

The concentration method according to any one of Aspects 3 to 7, wherein a sensitivity improvement rate represented by a ratio of the concentration of the analysis solute contained in the analysis solution after concentration to the concentration of the analysis solute contained in the analysis solution before concentration is 1.5 to less than 2,000-fold.

<<Aspect 21>>

An analysis method, in which an analysis solution containing an analysis solute and an analysis solvent is concentrated by the concentration method according to any one of Aspects 1 to 7, and then subjected to instrumental analysis.

<<Aspect 22>>

The analysis method according to Aspect 21, wherein the instrumental analysis is selected from the group consisting of liquid chromatography, gas chromatography, inductively coupled plasma analysis, atomic absorption spectrometry, and ion chromatography.

<<Aspect 23>>

A concentration kit for carrying out the concentration method according to any one of Aspects 3 to 7, wherein

the concentration kit has a structure which enables the analysis solution and the draw solution to be brought into contact with each other via a forward osmosis membrane, whereby the analysis solvent in the analysis solution is removed by passing through the forward osmosis membrane and moving into the drawing solvent,
the concentration kit does not comprise a circulation means, and
the amount Vf of the analysis solution which can be filled into the concentration kit is 0.01 mL to 50 mL.

<<Aspect 24>>

The concentration kit according to Aspect 23, wherein the forward osmosis membrane has a hollow fiber shape or a tubular shape, and
the analysis solution is arranged in the inner space of the hollow fiber or tubular forward osmosis membrane, and the analysis solution-containing forward osmosis membrane is configured to be immersed in the draw solution.

<<Aspect 25>>

The concentration kit according to Aspect 23, wherein the forward osmosis membrane has a flat membrane shape, and

has one or a plurality of partition structures for storing the analysis solution on one side of the flat forward osmosis membrane,
the analysis solution stored in the partition structure can contact one side of the flat forward osmosis membrane, and
the other surface of the flat forward osmosis membrane has a configuration which allows the draw solution to come into contact therewith.

[ADVANTAGEOUS EFFECTS OF INVENTION]

According to the present invention, first, there can be provided a concentration method in which the discrepancy between the "theoretical concentration magnification" and the "analysis solute concentration magnification" is suppressed in pre-concentration, as well as an analysis method for an analysis solution, comprising this concentration method.

Second, there can be provided a concentration method with which the loss of analysis solute during the concentration process is suppressed and which enables effective concentration without deterioration of the components in the analysis solution, even when the amount of the analysis solution is small, as well as an analysis method of the analysis solution, comprising this concentration method.

BRIEF DESCRIPTION OF DRAWINGS

FIG. 1 is a schematic cross-sectional view showing an example of the structure of a hollow fiber forward osmosis membrane module used in the concentration method according to a first aspect of the present invention.
FIG. 2 is a schematic diagram showing an example of the structure of a concentration device used in the concentration method of the first aspect of the present invention.
FIG. 3 is an HPLC chart (n=2) and calibration curve of the analysis solution (mizoribine aqueous solution) of Example A-1 before concentration.
FIG. 4 is an HPLC chart (n=2) and calibration curve of the analysis solution after concentration of Example A-1.
FIG. 5 is an HPLC chart (n=2) and calibration curve of the analysis solution (cleaning rinse liquid A) of Reference Example A-2 before concentration.
FIG. 6 is an HPLC chart (n=2) and a calibration curve of the analysis solution after concentration of Reference Example A-2.
FIG. 7 is an HPLC chart (n=2) and a calibration curve of the analysis solution (cleaning rinse liquid B) of Example A-3 before concentration.
FIG. 8 is an HPLC chart (n=2) and a calibration curve of the analysis solution after concentration of Example A-3.
FIG. 9 is an HPLC chart (n=2) and a calibration curve of the analysis solution after concentration (cleaning rinse liquid B) in Comparative Example a-5.
FIG. 10 is a schematic cross-sectional view showing the structure of the small hollow fiber forward osmosis membrane module used in Examples B-1 to B-3, B-6, and B-7, and Comparative Examples b-1 and b-2.
FIG. 11 is a schematic perspective view showing the structure of the flat forward osmosis membrane plate used in Examples B-4 and B-5.
FIG. 12 is a schematic cross-sectional view showing the structure of the flat forward osmosis membrane plate used in Examples B-4 and B-5.

DESCRIPTION OF EMBODIMENTS

<<Concentration Method>>

The present inventors focused on concentration using a forward osmosis membrane as a technology for concentrating analysis solutions without heating and without applying pressure, and conducted detailed investigation regarding the conditions for application to the concentration of dilute or small amounts of analysis solutions.
As a result, they have arrived at a new concentration method in two aspects.
The concentration method according to a first aspect of the present invention provides:
a concentration method for concentrating an analysis solution containing an analysis solute and an analysis solvent prior to analysis by means of an analysis device, wherein the concentration method is:

a concentration method by means of a forward osmosis method, in which the analysis solution and a draw solution are brought into contact with each other via a forward osmosis membrane, and the analysis solvent in the analysis solution is removed by passing through the forward osmosis membrane and moving into the drawing solvent, using a concentration device comprising a forward osmosis membrane module including a forward osmosis membrane, an analysis solution tank, an analysis solution feed piping, a draw solution tank, and a draw solution feed piping, a total of a volume of an analysis solution passage part of the forward osmosis membrane module and a volume of the analysis solution feed piping is 500 mL or less, and a concentration of the analysis solute in the analysis solution is 0.01 ppm or less, and the concentration of the analysis solute in the analysis solution after concentration is 0.02 ppm or more.

The effective membrane area M of the forward osmosis membrane may be 0.1 cm$^2$ to 0.20 m$^2$.
The present inventors have conducted detailed investigation regarding the phenomenon wherein a discrepancy occurs between the "theoretical concentration magnification" and "analysis solute concentration magnification" in pre-concentration. As a result, they have discovered a unique phenomenon in which the discrepancy between the "theoretical concentration magnification" and the "analysis solute concentration magnification" decreases when the analysis solute concentration in the analysis solution before concentration is below a certain value, and have completed an aspect of the present invention. This concentration method can be carried out particularly efficiently when the effective membrane area of the forward osmosis membrane is within a predetermined range.
The concentration method according to a second aspect of the present disclosure provides:
a concentration method for concentrating an analysis solution containing an analysis solute and an analysis solvent prior to analysis by means of an analysis device, wherein the concentration method is:

a concentration method by means of a forward osmosis method, in which the analysis solution and a draw solution are brought into contact with each other via a forward osmosis membrane, and the analysis solvent in the analysis solution is removed by passing through the forward osmosis membrane and moving into the drawing solvent, the analysis solution is not recycled during concentration, and an amount Vf of the analysis solution used in the concentration method is 0.01 mL to 50 mL.

In this concentration method, the ratio (Vf/M) of the amount Vf (L) of the analysis solution to the effective membrane area M (m$^2$) of the forward osmosis membrane is preferably 0.01 L/m$^2$ to less than 200 L/m$^2$.
The present inventors have also investigated in detail the phenomenon wherein when concentration using a membrane is carried when a small amount of analysis solution is used, the analysis solute in the analysis solution is lost and effective concentration cannot be carried out.

The concentration method using a forward osmosis membrane is applied to the concentration of a relatively large amount of analysis solution. In this case, the concentration operation is usually carried out in such a manner that the analysis solution is circulated so as to move relative to the forward osmosis membrane.

However, the present inventors have discovered that when the amount of analysis solution is small, effective concentration can be carried out without circulating the analysis solution, leading to the second aspect of the present invention. This concentration method can be particularly effective when the area of the forward osmosis membrane is within a specific range relative to the amount of analysis solution.

Each element of the concentration method of the present invention will be described in order below.

In the following description, portions which are not specifically described are features which are applicable to both the first and second aspects of the present invention.

<Analysis Solution>

The analysis solution to be concentrated by the concentration method of the present invention contains an analysis solute and an analysis solvent.

Examples of the analysis solution of the present invention include perfluoroalkyl compounds and polyfluoroalkyl compounds such as perfluorooctanoic acid (PFOA) and perfluorooctanesulfonic acid (PFOS); environmental hormones such as polychlorinated biphenyls and dioxins; odorous substances such as 2-methylisobomeol, 2,4,6-trichloroanisole, 2,4,6-tribromoanisole, diosmin, 1-octen-3-ol, 3-octanone; low molecular weight organic compounds such as dichloromethane, chloroform, tetrahydrofuran, ethyl acetate, isopropyl acetate, methanol, ethanol, ammonia, dimethyl sulfoxide, dimethylformamide; biological substances and biomarkers such as metabolites, peptides (oligopeptides), amino acids, proteins, nucleic acids, and exosomes; pharmaceuticals and cosmetics such as small molecule drugs, pharmaceutical intermediates, antibiotics, vitamins, and cosmetic intermediates; manufacturing intermediates for these pharmaceuticals and cosmetics; raw materials for the production of these pharmaceuticals and cosmetics; pigments; pesticides; hazardous substances present in the environment such as carcinogenic substances; drugs such as narcotics; salts; ions; radioactive substances such as iodine-131, cesium-134, cesium-137, strontium-90, and plutonium-239; viruses such as coronavirus; bacteria; and pathogens.

Small molecule drugs refer to synthetic drugs with a molecular weight of approximately 500 or less. Examples of small molecule drugs include immunosuppressants such as cyclosporine, mizoribine, cyclophosphamide, azathioprine; tyrosine kinase inhibitors such as gefitinib, erlotinib, and osimertinib; FLT tyrosine kinase inhibitors such as giltertinib; anaplastic lymphoma kinase inhibitors such as crizotinib, ceritinib, alectinib; Janus kinase inhibitors such as tofacitinib, baricitinib, ruxolitinib; RARP inhibitors such as olaparib and niraparib; Raf kinase inhibitors such as sorafenib and vemurafenib; MEK inhibitors such as trametinib; CDK inhibitors such as palbociclib; and proteasome inhibitors such as bortezomib and carfilzomib.

Examples of the analysis solvent of the present invention include water, organic solvents, and mixtures thereof. Examples of organic solvents include alcohols, esters, ethers, aprotic polar compounds, aromatic compounds, aliphatic compounds, chlorinated hydrocarbons, ketones, and aldehydes.

Specific examples of the analysis solvent include water; alcohols such as methanol, ethanol, normal propanol, isopropanol, normal butanol, sec-butanol, t-butanol, and hexafluoroisopropyl alcohol; esters such as methyl formate, ethyl formate, methyl acetate, ethyl acetate, isopropyl acetate, butyl acetate, and isobutyl acetate; ethers such as tetrahydrofuran, 2-methyltetrahydrofuran, 1,4-dioxane, cyclopentyl methyl ether, t-butyl methyl ether, anisole, and 1,2-dimethoxyethane; aprotic polar compounds such as acetonitrile, dimethylacetamide, N-methylpyrrolidone, N,N-dimethylformamide, dimethylsulfoxide, nitromethane, and sulfolane; aromatic compounds such as benzene, toluene, xylene, cumene, and pyridine; examples of aliphatic compounds such as heptane, hexane, cyclohexane, methylcyclohexane, and tetralin; chlorinated hydrocarbons such as dichloromethane, chloroform, carbon tetrachloride, 1,2-dichloroethane, 1,2-dichloroethene, 1,1,1-trichloroethane, 1,1,2-trichloroethene, and chlorobenzene; ketones such as acetone, methyl butyl ketone, methyl ethyl ketone, and methyl isobutyl ketone; and aldehydes such as formaldehyde, acetaldehyde, propionaldehyde, butanal, acrolein, benzaldehyde, furfural, and vanillin.

From the viewpoint of sample handling, the analysis solvent is preferably one or more selected from water and alcohols.

In the first aspect of the present invention, the concentration of the analysis solute in the analysis solution before concentration is 0.01 ppm or less. When the concentration of the analysis solute in the analysis solution before concentration is 0.01 ppm or less, the discrepancy between the "theoretical concentration magnification" and the "analysis solute concentration magnification" in the concentration analysis solution is suppressed.

The concentration of the analysis solute in the analysis solution before concentration in the first aspect of the present invention may be 0.0099 ppm or less, 0.0098 ppm or less, 0.0095 ppm or less, 0.0090 ppm or less, or 0.0085 ppm or less. Conversely, from the viewpoint of ensuring the effectiveness of the analysis to which the analysis solution after concentration is subject, the concentration of the analysis solute in the analysis solution before concentration may be 0.01 ppt (parts per trillion) or more, 0.1 ppt or more, 1.0 ppt or more, 10 ppt or more, 100 ppt or more, 0.001 ppm or more, 0.0020 ppm or more, 0.0030 ppm or more, or 0.0050 ppm or more.

When the analysis solution before concentration is such a dilute solution that the concentration of analysis solute contained therein cannot be detected, the concentration of analysis solute in the analysis solution before concentration can be determined by, for example, the following method:

a dilute solution of a known concentration is prepared using the same analysis solute and analysis solvent as the dilute analysis solution of unknown concentration;

the obtained dilute solution is concentrated by changing the concentration magnification in accordance with the method of the present invention;

the "theoretical concentration magnification" and "analysis solute concentration magnification" is calculated for each obtained concentrate, and a calibration curve between the two is calculated; and

the above calibration curve is applied to the concentrate from the dilute analysis solution and with an unknown concentration.

In the second aspect of the present invention, the concentration of the analysis solute in the analysis solution may be, for example, 0.1 ppt (parts per trillion) or more and 5% by mass (50,000 ppm (parts per million), equivalent to "μg/mL") or less, and may be 1.0 ppt to 1% by mass (10,000 ppm), 10 ppt to 5,000 ppm, 100 ppt to 1,000 ppm, or 200 ppt to 500 ppm.

The viscosity of the analysis solution in the present invention is preferably less than 5,000 mPa·sec. The method of the present invention provides effective concentration when applied to relatively low viscosity analysis solutions. From this point of view, the viscosity of the analysis solution may be 4,000 mPa·sec or less, 3,000 mPa·sec or less, 2,000 mPa·sec or less, 1,000 mPa·sec or less, 500 mPa·sec or less, 100 mPa·sec or less, 50 mPa·sec or less 10 mPa·sec or less, or 5 mPa·sec or less. The viscosity of the analysis solution may be 0.1 mPa·sec or more or 0.5 mPa·sec or more.

Specific examples of the analysis solution of the present invention include natural water such as pond water, river water, lake water, and sea water; treated water such as treated water from water treatment plants, treated water from sewage treatment plants, wastewater from power plants, tap water, sewage, agricultural water, and fishing water for aquaculture; factory wastewater, cleaning rinse liquid; biological fluids such as blood, urine, tears, and sweat; analysis water for drug testing; and process solutions in pharmaceutical manufacturing, cosmetic manufacturing, and chemical manufacturing.

In the first aspect of the present invention, the solution amount Vf of the analysis solution is arbitrary.

However, in the first aspect of the present invention, the solution amount Vf of the analysis solution may be 0.1 mL to 10 L, 0.12 mL to 8 L, 0.14 mL to 6 L, 0.16 mL to 5 L, 0.18 mL to 1 L, 0.2 mL to 500 mL, or 0.3 mL to 300 mL.

In the second aspect, the solution amount Vf of the analysis solution is 0.01 mL to 50 mL.

In the second aspect of the present invention, the solution amount Vf of the analysis solution is 50 mL or less. When the amount Vf of the analysis solution is 50 mL or less, effective concentration is possible by means of the second aspect concentration method of the present invention. Further, from the viewpoint of ensuring effective concentration, the solution amount Vf of the analysis solution is 0.01 mL or more.

<Draw Solution>

The draw solution in the concentration method of the present invention has a higher osmotic pressure than the analysis solution, and has a function of moving the analysis solvent in the analysis solution to the draw solution side using the osmotic pressure difference between the draw solution and the analysis solution as a driving force.

The draw solution may have any composition as long as it has the above function. However, the draw solution in the present invention is typically composed of a draw substance dissolved in a draw solvent.

The osmotic pressure of the draw solution formed by dissolving a draw substance in a solvent can be approximately estimated by the Van't Hoff equation shown in formula (3) below.

$$\Pi = CRT \ (1)$$

where $\Pi$ is the osmotic pressure (Pa), C is the molar concentration of the draw substance (mol/L), and R is the gas constant (Pa·L/(K·mol)).

The draw solution of the present invention is preferably a solution containing one or more selected from the group consisting of salts, organic acids, sugars, alcohols, glycols, organic polymers, and organic solvents.

Examples of the draw substance in the draw solution include salts, organic acids, sugars, alcohols, glycols, organic polymers, and organic solvents. Thus, the draw solution in the present invention may be a solution containing one or more selected from salts, organic acids, sugars, alcohols, glycols, organic polymers, and organic solvents. Inorganic salts and salts of organic acids are preferable as the salt.

Specific examples of the draw substance include inorganic salts such as sodium chloride, magnesium chloride, calcium chloride, sodium sulfate, sodium hydrogen carbonate, potassium hydrogen carbonate, sodium hydrogen sulfate, potassium hydrogen sulfate, magnesium sulfate, potassium sulfate, sodium phosphate, disodium hydrogen phosphate, sodium dihydrogen phosphate, potassium phosphate, dipotassium hydrogen phosphate, potassium dihydrogen phosphate, sodium carbonate, potassium carbonate, sodium hydroxide, and potassium hydroxide; organic acids such as formic acid, acetic acid, propionic acid, citric acid, fluoroacetic acid, difluoroacetic acid, trifluoroacetic acid, oxalic acid, gluconic acid, lactic acid, glycolic acid, and glyceric acid; salts of these organic acids; sugars include common sugars such as sucrose, fructose, and glucose; special sugars such as oligosaccharides and rare sugars; alcohols such as methanol, ethanol, 1-propanol, and 2-propanol; glycols such as ethylene glycol, and propylene glycol; organic polymers such as polyethylene oxide, and polypropylene oxide, and copolymers thereof; and organic solvents such as toluene, benzene, and xylene.

The draw substance in the draw solution of the present invention is preferably an inorganic salt from the viewpoint of obtaining a draw solvent having a high osmotic pressure.

As the draw solvent in the draw solution, for example, one or more selected from water and organic solvents can be used.

Specifically, the analysis solvent in the analysis solution can be appropriately selected and used from the above-described specific examples. However, the draw solvent is preferably the same type of solvent as the analysis solvent from the viewpoint of avoiding mixing of a different type of solvent into the analysis solution.

The concentration of the draw substance in the draw solution may be appropriately set so as to exhibit the desired osmotic pressure.

<Forward Osmosis Membrane>

The forward osmosis membrane used in the concentration method of the present invention has the function of moving the analysis solvent in the analysis solution from the analysis solution to the draw solution and removing it from the analysis solution using the osmotic pressure difference between the analysis solution and the draw solution as a driving force. Thus, the forward osmosis membrane used in the concentration method of the present invention is preferably a semipermeable membrane having a high permeation rate of the analysis solvent in the analysis solution and a low permeation rate of the draw substance in the draw solution.

It is preferable for the forward osmosis membrane to have such permeation performance because it is possible to carry out effective concentration while avoiding mixing of the draw solution into the analysis solvent during concentrating of the analysis solution.

In the first aspect of the present invention, the effective membrane area of the forward osmosis membrane is preferably 0.1 cm$^2$ to 0.20 m$^2$ (2,000 cm$^2$). By setting the effective membrane area of the forward osmosis membrane to 0.1 cm$^2$ or more, concentration can be achieved in a short time. By setting the effective membrane area to 0.20 m$^2$ or less, workability when concentrating a small amount of analysis solution is improved. The effective membrane area of the forward osmosis membrane is more preferably 1.0 cm$^2$ to 0.1 m$^2$ (1,000 cm$^2$), and further preferably 5.0 cm$^2$ to 0.1 m$^2$. A forward osmosis membrane having an effective membrane area of 0.1 m$^2$ or less can be applied to portable, mobile, small-sized forward osmosis membrane modules, and is preferable from the viewpoint of workability.

In the second aspect of the present invention, the effective membrane area M of the forward osmosis membrane is preferably 0.001 cm$^2$ to 500 cm$^2$. When the effective membrane area of the forward osmosis membrane is 0.001 cm$^2$ or more, the workability of concentration improves. Further, it is preferable that the effective membrane area of the forward osmosis membrane be 500 cm$^2$ or less, since it can be applied to portable, mobile, small-sized forward osmosis membrane modules, whereby concentration operations at the collection site of the analysis solution is possible.

The second aspect of the present invention can also be carried out particularly effectively when the area of the forward osmosis membrane is within a specific range relative to the amount of analysis solution.

Specifically, the effective surface area M (m$^2$) of the forward osmosis membrane is preferably set such that the ratio (Vf/M) between the amount of analysis solution Vf (L) and the effective membrane area M (m$^2$) of the forward osmosis membrane is within the range of 0.01 L/m$^2$ to less than 200 L/m$^2$.

When this ratio Vf/M is 0.01 L/m$^2$ or more, the handling efficiency of the analysis solution is improved when concentrating a small amount of analysis solution. Since the ratio Vf/M is less than 200 L/m$^2$, concentration can be carried out in a short time. The ratio Vf/M is more preferably 0.05 L/m$^2$ to 150 L/m$^2$, further preferably 0.1 L/m$^2$ to 100 L/m$^2$, particularly preferably 0.35 L/m$^2$ to 50 L/m$^2$, and most preferably 0.5 L/m$^2$ to 15 L/m$^2$.

The effective membrane area of the forward osmosis membrane refers to the area of the forward osmosis membrane where the analysis solution can come into contact with the draw solution via the forward osmosis membrane. In a forward osmosis membrane that is modularized, as will be described later, the portion covered with adhesive for fixation to the module is not included in the effective membrane area.

The shape of the forward osmosis membrane used in the concentration method of the present invention is preferably hollow fiber, tubular, or flat membrane. Here, "hollow fiber" means a hollow tube shape with an outer diameter of approximately 5 mm or less, and "tubular shape" means a hollow tube shape with an outer diameter of approximately more than 5 mm.

When the forward osmosis membrane has a hollow fiber shape or a tubular shape, the inner diameter of the forward osmosis membrane is preferably 20 $\mu$m to 5,000 $\mu$m, more preferably 50 $\mu$m to 3,000 $\mu$m, further preferably 100 $\mu$m to 2,000 $\mu$m, and particularly preferably 500 $\mu$m to 1,000 $\mu$m.

In the second aspect of the present invention, since the amount of analysis solution used in the method of the present invention is relatively small, the forward osmosis membrane is preferably composed of a material to which organic compounds are unlikely to adsorb. This requirement is quantitatively ensured by satisfying the Brilliant Blue R recovery rate measured under the following conditions.

After standing at room temperature (25°C) for 24 hours, in a state in which a forward osmosis membrane having an effective membrane area of M ($m^2$) was brought into contact with a Brilliant Blue R aqueous solution Vr (L) having a concentration of 10 ppm under the condition of Vr/M = 1.8 L/$m^2$, the amount of Brilliant Blue R contained in the collected Brilliant Blue R aqueous solution is 80% or more of the amount of Brilliant Blue R contained in the Brilliant Blue R aqueous solution before contact with the forward osmosis membrane.

In the concentration method of the present invention, when a forward osmosis membrane exhibiting such a recovery rate of Brilliant Blue R is used, since the analysis solute contained in the analysis solution is inhibited from being adsorbed to the forward osmosis membrane, highly efficient concentration without loss of analysis solute is possible.

From this point of view, it is more preferable that the recovery rate of Brilliant Blue R be 90% or more.

The forward osmosis membrane used in the concentration method of the present invention may be composed of any material as long as it has the above performance, shape, and size. However, the forward osmosis membrane is preferably a membrane containing one or more selected from the group consisting of polyethersulfone, polysulfone, polyketone, polyetheretherketone, polyphenylene ether, polyvinylidene fluoride, polyacrylonitrile, polyethylene, polyimine, polyimide, polybenzoxazole, polybenzimidazole, sulfonated tetrafluoroethylene, cellulose acetate, and polyamide.

A preferable forward osmosis membrane in the present invention is a composite membrane comprising a porous support layer and a separation active layer on one or both sides of the porous support layer. The materials constituting the porous support layer and the separation active layer can each be selected from the materials listed above. The porous support layer and the separation active layer may be composed of the same material, or may be composed of different materials. From the viewpoint of ensuring flexibility in the design of the forward osmosis membrane, it is preferable that the porous support layer and the separation active layer each be composed of a different material.

(Porous Support Layer)

The porous support layer plays the role of providing strength to the separation function layer. The porous support layer may have the ability to separate particles that are insoluble in the solvent, but preferably does not substantially have the ability to separate ions dissolved in the solvent.

The porous support layer is a layer having minute through holes (pores). The pore diameter of the porous support layer is preferably 0.001 $\mu$m to 0.2 $\mu$m, more preferably 0.005 $\mu$m to 0.1 $\mu$m, as the average pore diameter of the surface opening.

The structure in the thickness direction of the porous support layer is preferably as sparse as possible as long as the strength can be maintained, in order to reduce the permeation resistance of the permeate. Preferably, the sparse structure is, for example, a net-like structure, a finger-like void structure, or a mixed structure thereof.

The shape of the porous support layer may be set so as to match the desired shape of the forward osmosis membrane.

The porous support layer may have, for example, a hollow fiber shape, a tubular shape, or a flat membrane shape.

The material of the porous support layer is preferably selected from the materials exemplified above, and it is particularly preferably composed of resin.

Examples of resins include polysulfone, polyethersulfone, polyketone, polyamide, polyimide, polyester, cellulose polymer, vinyl polymer, polyphenylene sulfide, polyphenylene sulfide sulfone, polyphenylene sulfone, polyphenylene oxide, polybenzoxazole, and polybenzimidazole, and homopolymers or copolymers of these can be used alone or in combination of two or more thereof. Derivatives of these polymers having arbitrary functional groups in their main chains, side chains, or terminals can also be used as the resin of the present embodiment.

Specific examples of the resin include the following.

Cellulose-based polymers such as cellulose acetate, and cellulose nitrate; and
vinyl polymers such as polyethylene, polypropylene, polyvinyl chloride, chlorinated polyvinyl chloride, polyvinyl alcohol, polyvinylidene fluoride, and polyacrylonitrile.

Among those exemplified above, it is particularly preferable that one or more selected from polysulfone, polyacrylonitrile, polyamide, polyimide, polyester, polyvinyl alcohol, polyphenylene sulfide sulfone, polyphenylene sulfone, polyphenylene sulfide, polyether sulfone, polyvinylidene fluoride, cellulose acetate, polyketone, polybenzoxazole, polybenzimidazole, polyvinyl chloride, chlorinated polyvinyl chloride, and polyethylene be used.

Cellulose acetate, polysulfone, polyethersulfone, polyketone, polybenzoxazole, polybenzimidazole, polyacrylonitrile, and polyethylene are more preferable. Among these materials, it is preferable to use polysulfone or polyethersulfone because they are chemically, mechanically, and thermally stable, widely used, easily available, and easy to mold.

From the viewpoint of strength and compactness when applied to a small amount of analysis solution, the thickness of the porous support layer is preferably 50 $\mu$m to 1,000 $\mu$m, more preferably 75 $\mu$m to 500 $\mu$m, and further preferably 100 $\mu$m to 400 $\mu$m.

The porosity of the porous support layer is preferably 30% by volume or more from the viewpoint of speeding up mass transfer within the porous support layer. A high mass transfer within the porous support layer is preferable because a high osmotic pressure can be maintained through the separation active layer and efficient concentration can be achieved. Conversely, from the viewpoint of physical strength, the porosity of the porous support layer is preferably 97% by volume or less.

(Separation Active Layer)

The separation active layer is essentially responsible for the solute separation function in the forward osmosis membrane. More specifically, it has the function of separating the solvent in a liquid mixture from the solute such as ions dissolved in this solvent.

The separation active layer may be present on only one side of the porous support membrane, or may be present on both sides of the support membrane. However, the forward osmosis membrane used in the concentration method of the present invention is expected to have the function of separating the analysis solvent and analysis solute in the analysis solution, allowing the analysis solution to pass through but not the analysis solute. Thus, it is preferable that the separation active layer be present on the side of the porous support membrane in contact with the analysis solution, and that is sufficient. Therefore, the separation active layer may be present only on one side of the porous support membrane.

When the forward osmosis membrane has a hollow fiber or tubular shape, the separation active layer is preferably present on the inner surface of the hollow fiber or tubular porous support layer. It is preferable to arrange the separation active layer inside the porous support layer because it is possible to avoid damage to the separation active layer due to rubbing of the forward osmosis membrane during concentration. In this case, it is preferable that the analysis solution pass through or be arranged in the inner space of the hollow fiber or tubular forward osmosis membrane, and the draw solution pass through or be arranged outside the hollow fiber or tubular forward osmosis membrane.

When the forward osmosis membrane is flat, the separation active layer is preferably present on one surface of the flat porous support layer. In this case, it is preferable that the analysis solution pass through or be arranged on the separation active layer side of the flat forward osmosis membrane, and the draw solution pass through or be arranged on the porous support layer side of the forward osmosis membrane.

The material of the separation active layer is preferably selected from the materials exemplified above, and it is preferably composed of a polyamide.

The separation active layer composed of a polyamide is preferably a polycondensation product of a polyfunctional amine and a polyfunctional acid halide. The separation active layer composed of a polyamide is preferably formed by carrying out interfacial polycondensation on the surface of the porous support using an aqueous solution containing a polyfunctional amine and a solution containing a polyfunctional acid halide. The organic solvent in the organic solvent solution containing the polyfunctional acid halide is preferably an organic solvent that is immiscible with water.

The method for forming the separation active layer composed of a polyamide will be described in detail later.

The thickness of the separation active layer is preferably as thin as possible as long as there are no pinholes. However, in order to maintain mechanical strength, it is desirable to have an appropriate thickness. In consideration of film formation stability and water permeation resistance, the thickness of the separation active layer is preferably 0.01 to 3 $\mu$m, more preferably 0.1 to 1 $\mu$m, and further preferably 0.1 to 0.8 $\mu$m.

(Forward Osmosis Membrane Production Method)

Next, among the forward osmosis membranes used in the concentration method of the present invention, methods for the production of a hollow fiber forward osmosis membrane having a separation active layer composed of a polyamide on the inner surface of a hollow fiber porous support layer, which is a preferred embodiment, and a flat forward osmosis membrane having a separation active layer composed of a polyamide on one surface of a flat porous support layer will be described in order.

(Hollow Fiber Forward Osmosis Membrane Production Method)

First, a hollow fiber porous support layer is produced.

A hollow fiber support layer consisting of a hollow fiber porous support can be produced using a material selected from the above resins by a known wet/dry film forming method, melt film forming method, or wet film forming method.

Among these, a dry-wet spinning method in which a hollow fiber-like membrane is formed by discharging a spinning stock solution in which a resin (polymer) is dissolved in a solvent and an internal coagulating liquid from a double annular nozzle (spinning spout), run through a hollow space, and then coagulated in a coagulating bath containing an external coagulating liquid is preferably used. The obtained hollow fibers may be wound on a winding machine and cut to a predetermined length for use.

When forming a hollow fiber porous support layer, for example, as described above, a double spinneret is used, the spinning stock solution is discharged from the outer annular openings thereof, and the internal coagulation liquid is discharged from the inner openings thereof.

As the internal coagulation liquid, for example, an aqueous solution containing one or more additives selected from alcohols, ethylene glycols, and amide solvents can be used.

As the external coagulating liquid used as the coagulating bath, one or more selected from water and non-solvents of the resin constituting the porous support layer can be used.

A suitable hollow fiber forward osmosis membrane can be obtained by forming a separation active layer composed of a polyamide on the inner surface of the hollow fiber porous support layer obtained as described above.

The separation active layer composed of a polyamide can be formed by carrying out interfacial polycondensation on the surface of the porous support layer using an aqueous solution containing a polyfunctional amine and a solution containing a polyfunctional acid halide, as described above.

In the present embodiment, a preferable method for forming the separation active layer includes, for example, a method of passing a first solution containing a polyfunctional amine and a second solution containing a polyfunctional acid halide into the inner space of a porous support layer in this order.

A polyfunctional amine is an amine having two or more of at least one of a primary amino group and a secondary amino group in one molecule. Examples thereof include aromatic polyfunctional amines such as o-phenylenediamine, m-phenylenediamine, p-phenylenediamine, o-xylylenediamine, m-xylylenediamine, p-xylylenediamine, 1,3,5-triaminobenzene, 1,2,4-triaminobenzene, 3,5-diaminobenzoic acid, 3-aminobenzylamine, and 4-aminobenzylamine; aliphatic amines such as ethylenediamine and propylene diamine; alicyclic polyfunctional amines such as 1,2-diaminocyclohexane, 1,4-diaminocyclohexane, 4-aminopiperidine, and 4-aminoethylpiperazine; and secondary amines such as piperazine and 1,3-bispiperidylpropane. Among these, in consideration of separation performance, water permeation resistance, and heat resistance, the amine is preferable an aromatic polyfunctional amine having 2 to 4 of at least one of a primary amino group and a secondary amino group in one molecule. As such a polyfunctional aromatic amine, m-phenylenediamine, p-phenylenediamine, or 1,3,5-triaminobenzene is preferably used. In particular, it is more preferable to use m-phenylenediamine because of the ease of availability and handling thereof. These polyfunctional amines can be used alone or as a mixture of two or more thereof. When mixing two or more polyfunctional amines, the above amines may be combined.

A polyfunctional acid halide is an acid halide having at least two halogenated carbonyl groups in one molecule. Examples thereof include:

trifunctional acid halides such trimesic acid chloride, 1,3,5-cyclohexanetricarboxylic acid trichloride, and 1,2,4-cyclobutanetricarboxylic acid trichloride; and
difunctional acid halides include aromatic difunctional acid halides such as biphenyldicarboxylic acid dichloride, azobenzenedicarboxylic acid dichloride, terephthalic acid chloride, isophthalic acid chloride, and naphthalenedicarboxylic acid chloride; aliphatic difunctional acid halides such as adipoyl chloride and sebacoyl chloride; and alicyclic difunctional acid halides such as cyclopentanedicarboxylic acid dichloride, cyclohexanedicarboxylic acid dichloride, and tetrahydrofurandicarboxylic acid dichloride.

In consideration of reactivity with polyfunctional amines, the polyfunctional acid halide is preferably a polyfunctional acid chloride. In consideration of separation performance and heat resistance of the resulting forward osmosis membrane, the polyfunctional acid chloride is preferably a polyfunctional aromatic acid chloride having 2 to 4 carbonyl chloride groups in one molecule. In particular, trimesic acid chloride is preferably used from the viewpoint of availability and ease of handling.

These polyfunctional acid halides can be used alone or as a mixture of two or more.

The proportions of the polyfunctional amine and the polyfunctional acid halide may be appropriately set in consideration of the type of the porous support layer and interfacial polymerization conditions so that the separation active layer exhibits the desired separation performance. Appropriate proportions of polyfunctional amine and polyfunctional acid halide can be easily determined by a person skilled in the art through a small number of preliminary experiments.

Interfacial polymerization of a polyfunctional amine and a polyfunctional acid halide can be carried out in accordance with a conventional method. The obtained separation active layer may be subjected to heat treatment as appropriate. This heat treatment is preferably carried out in a wet state. The heat treatment of the separation active layer may be carried out, for example, with hot water or with high-temperature and high-pressure steam in a pressure vessel such as an autoclave.

By applying heat treatment to the separation active layer, back diffusion of the draw solution is reduced, although the reason is not clear.

(Flat Membrane Forward Osmosis Membrane Production Method)

In the production of a flat forward osmosis membrane having a separation active layer composed of a polyamide on one surface of a flat porous support layer, first, a flat porous support layer is produced.

The flat membrane-like porous support layer can be produced using a desired resin by a known method such as melt extrusion, solution casting, or calendaring, or by a method with appropriate modifications made by a person skilled in the art.

A suitable flat forward osmosis membrane can be obtained by forming a separation active layer composed of a polyamide on one side of the thus-obtained flat porous support layer.

In the present embodiment, examples of preferable methods for forming the separation active layer include a method of carrying out interfacial polymerization by bringing a first solution containing a polyfunctional amine and a second solution containing a polyfunctional acid halide into contact in this order on one side of a porous support layer.

Regarding the polyfunctional amine, the solvent of the first solution, the polyfunctional acid halide, the solvent of the second solution, and the interfacial polymerization conditions, the descriptions regarding the formation of the separation active layer of the hollow fiber forward osmosis membrane can be referred to. Similarly to the case of hollow fiber forward osmosis membranes, heat treatment may be carried out after the formation of the separation active layer.

In the concentration method of the present invention, when using a forward osmosis membrane in the form of a forward osmosis membrane module, as described below, the forward osmosis membrane obtained by carrying out the above interfacial polymerization on a porous support layer may be modularized, or a forward osmosis membrane module may also be obtained modularizing the porous support layer, and carrying out the interfacial polymerization described above on the porous support layer inside the module to form the porous support layer inside the module into a forward osmosis membrane. The porous support layer may be modularized, the forward osmosis membrane module obtained by carrying out the interfacial polymerization described above on the porous support layer inside the module may be disassembled, removing the forward osmosis membrane, which may then be housed in another housing and re-modulated.

<Forward Osmosis Membrane Module>

In the concentration method of the present invention, it is preferable to use a forward osmosis membrane module in the form of a forward osmosis membrane module, which is configured by housing a forward osmosis membrane in a suitable housing, from the viewpoint of workability of concentration.

The forward osmosis membrane module preferably has a structure in which the space inside the housing is divided by the forward osmosis membrane into two parts of an analysis solution passage space through which the analysis solution passes, and a draw solution passage space through which the draw solution passes.

The analysis solution liquid passage space and the draw solution liquid passage space are fluidly isolated from each other, except that substances can freely pass through the forward osmosis membrane.

(Hollow Fiber Forward Osmosis Membrane Module)

When the forward osmosis membrane has a hollow fiber or tubular shape, an aspect of a hollow forward osmosis membrane module in which the hollow fiber or tubular forward osmosis membrane is housed in a housing as a single forward osmosis membrane or as a bundle of a plurality of membranes, both ends of the forward osmosis membrane are affixed inside the housing with an adhesive layer, and lids are arranged on both ends of the housing is preferable. The shape of the housing is preferably, for example, cylindrical, elliptical, or prismatic.

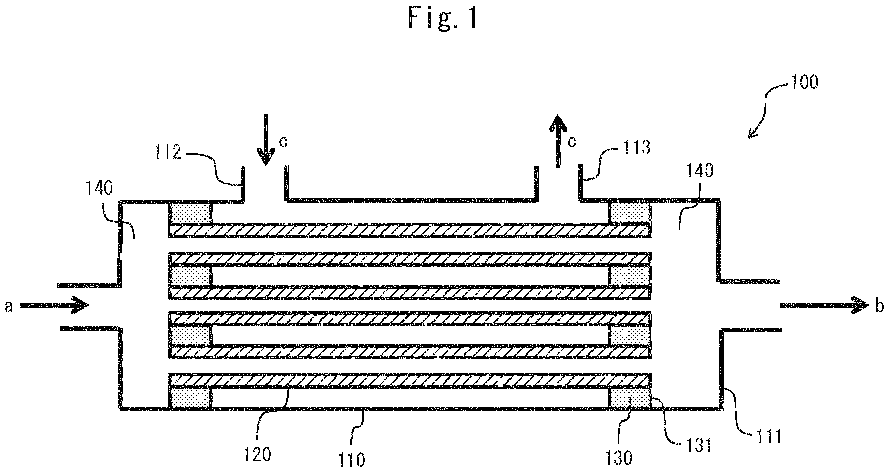

FIG. 1 shows a schematic cross-sectional view showing an example of the structure of a hollow fiber forward osmosis membrane module used in the concentration method of the present invention.

The forward osmosis membrane module (100) of FIG. 1 comprises a plurality of hollow fiber forward osmosis membranes (120) housed in a housing (110). Both ends of the hollow fiber forward osmosis membrane (120) are adhesively affixed to the housing (110) by an adhesive layer (130). Lids (111) are attached to the end surfaces (131) of the adhesive layer, which are provided with an inlet/outlet for liquids. The analysis solution (a) passes from the analysis solution inlet of the lid (111) (the left opening in FIG. 1) via the space (140) formed by the inner surface of the lid to the analysis solution passage space of the forward osmosis membrane module (100), passes through the inside of the hollow fiber forward osmosis membrane (120), is discharged from the analysis solution outlet (the opening on the right in FIG. 1) to the outside of the forward osmosis membrane module (100), and is collected.

The side of the housing (110) has a draw solution inlet (112) and a draw solution outlet (113). The draw solution (c) is introduced from the draw solution inlet (112) into the draw solution passage space of the forward osmosis membrane module (100), passes through the outside of the hollow fiber forward osmosis membrane (120), and is discharged from the draw solution outlet (113) to the outside of the forward osmosis membrane module (100).

In the forward osmosis membrane module (100) of FIG. 1, the inside of the housing (110) is divided into two spaces: an analysis solution passage space and a draw solution passage space by a hollow fiber forward osmosis membrane (120) and an adhesive layer (130), and both spaces are fluidly isolated, except that substances can freely pass through the hollow fiber forward osmosis membrane (120).

(Flat Membrane Forward Osmosis Membrane Module)

When the forward osmosis membrane has a flat membrane shape, the forward osmosis membrane module is preferably a flat forward osmosis membrane module having a structure in which the forward osmosis membrane is housed in a housing of an appropriate shape, and the space inside the housing is divided by the forward osmosis membrane into an analysis solution passage space through which analysis solution passes, and a draw solution passage space through which draw solution passes. In this case, the housing may have an analysis solution inlet and an analysis solution outlet that communicate with the analysis solution passage space, and may have a draw solution inlet and a draw solution outlet that communicate with the draw solution passage space.

Affixation of the flat forward osmosis membrane within the housing may be carried out by means of an adhesive layer formed from a suitable adhesive.

As a result of this structure, the analysis solution passes from the analysis solution inlet to the analysis solution passage space of the forward osmosis membrane module, passes over one side of the flat forward osmosis membrane, and is discharged from the analysis solution outlet to the outside of the forward osmosis membrane module and is collected. The draw solution is introduced from the draw solution inlet into the draw solution passage space of the forward osmosis membrane module, passes over the opposite surface of the flat membrane forward osmosis membrane, and is discharged from the draw solution outlet to the outside of the forward osmosis membrane module.

In the flat forward osmosis membrane module, the shape of the flat forward osmosis membrane in the housing is arbitrary as long as the above configuration can be adopted. For example, the shape may be a flat plate, or it may be a rolled body.

The flat forward osmosis membrane module is preferably a spiral module having a configuration in which a plurality of flat forward osmosis membranes are housed in a cylindrical housing, which are stacked and wound through appropriate spacers. A spiral module is preferable because the effective surface area of the forward osmosis membrane per unit volume is large.

(Material of Housing)

The material for the housing of the forward osmosis membrane module can be selected in accordance with the analysis solution and the draw solution, from the viewpoint of providing chemical resistance, pressure resistance, heat resistance, impact resistance, and weather resistance, without deterioration of the various performances. As the material of the housing, for example, a resin or metal can be used. From the above point of view, the material of the housing is preferably selected from resins such as polypropylene, polysulfone, polyethersulfone, polyvinylidene fluoride, polytetrafluoroethylene, perfluoroalkoxyalkane, ABS resin, fiber reinforced plastic, and vinyl chloride resins; and metals such as stainless steel, brass, and titanium.

(Material of Adhesive)

In the forward osmosis membrane module, it is desirable that the adhesive constituting the adhesive layer for affixing the forward osmosis membrane and the housing have suitable mechanical strength and heat resistance. As the adhesive, an adhesive resin composed of a resin can be used. Examples of adhesive resins include thermosetting epoxy resins, thermosetting urethane resins, ceramic type adhesives, polyethylene, and sealing materials obtained by melting low-melting metals. From the viewpoint of chemical resistance, polyethylene is desirable, and from the viewpoint of heat resistance and handling properties, epoxy resins are desirable.

<Concentration Method>

The concentration method of the present invention is a concentration method by means of the forward osmosis method, in which an analysis solution and a draw solution are brought into contact with each other via a forward osmosis membrane, and the analysis solvent in the analysis solution is removed by passing through the forward osmosis membrane and moving into the drawing solvent.

There is no need to heat the analysis solution and draw solution during concentration. The concentration temperature can be, for example, -20°C to 50°C, and preferably 0°C to 35°C, and is typically room temperature.

There is no need to pressurize the analysis solution and draw solution during concentration.

However, in the first aspect of the present invention, pressurization applied by a liquid pump is allowed in order to facilitate passage of the analysis solution and the draw solution. However, from the viewpoint of avoiding adsorption of the analysis solute by the membrane, the pressure applied to the analysis solution is preferably maintained below 500 kPa.

In the first aspect of the present invention, the analysis solution and the draw solution may each be stationary or moving relative to the forward osmosis membrane. In order to carry out uniform and efficient concentration in a short time, it is preferable to move the analysis solution and draw solution relative to the forward osmosis membrane surface, and more preferably, circulate the analysis solution and draw solution relative to the forward osmosis membrane surface.

When the forward osmosis membrane is hollow fiber-shaped, the flow velocity of the analysis solution and the draw solution is each preferably 0.03 cm/s to 15 cm/s, as a linear velocity in the length direction of the hollow fiber forward osmosis membrane. By setting the linear velocity to 0.03 cm/s or more, the analysis solution near the forward osmosis membrane is smoothly renewed, and the osmotic pressure difference between the analysis solution and the draw solution through the forward osmosis membrane can be maintained at a high level, which is preferable from the viewpoint of improving productivity. Conversely, by setting the linear velocity to 15 cm/s or less, pressure drop of the analysis solution flowing through the inner space of the hollow fiber forward osmosis membrane can be reduced, whereby the loss of the analyte due to adsorption to the forward osmosis membrane can be suppressed, which is preferable.

The flow directions of the analysis solution and the draw solution may be parallel flow or counterflow.

In the second aspect of the present invention, since the analysis solution is not circulated or passed through the membrane, pressurization applied by a liquid pump is not required. The draw solution may be circulated or passed through the membrane, but it is preferably not circulated or passed through.

In the second aspect of the invention, since the analysis solution is not circulated or passed through the membrane, the analysis solution does not move relative to the forward osmosis membrane. However, the volume of the analysis solution decreases as concentration progresses. At this time, movement in such a manner that the analysis solution whose volume has been reduced is gathered into a small area due to surface tension is allowed. It is permissible to move the analysis solution in an amount that allows it to come into contact with the forward osmosis membrane, and then replenish the new separation solution to compensate for the decrease in volume.

(Concentration Analysis Solution)

A concentration analysis solution, i.e., analysis solution which has been concentrated, is obtained in this manner.

The concentration analysis solution obtained by the concentration method of the present invention contains the analysis solute contained in the raw material analysis solution without being denatured or decomposed and with a high recovery rate.

According to the concentration method of the present invention, the concentration of the analysis solute contained in the concentration analysis solution can be set to 0.02 ppm or more, and this value can be set to 0.04 ppm or more, 0.05 ppm or more, or 0.06 ppm or more, 0.08 ppm or more, or 0.10 ppm or more. This value need not be excessively high, and may be, for example, 1% by weight or less, as long as the desired analysis is possible in the analysis carried out subsequent to the concentration method of the present invention.

In the first aspect of the present invention, the sensitivity improvement rate, which is expressed as a ratio to the concentration of analysis solute contained in the analysis solution before concentration, can be 2.0 to less than 2,000, and in the second aspect, can be 1.5 to less than 2,000.

When the sensitivity improvement rate is 1.5 or more or 2.0 or more, the concentration of the analyte in the concentration analysis solution will be sufficiently high, and the sensitivity will improve during analysis subsequent to concentration, which is preferable. Conversely, it is preferable that the sensitivity improvement rate be less than 2,000, since it is possible to suppress an excessive increase in the viscosity of the concentration analysis solution and avoid a decrease in concentration efficiency due to a decrease in the substance diffusion rate of the solution in the vicinity of the forward osmosis membrane. It is preferable that the sensitivity improvement rate be less than 2,000 because the concentration time can be shortened.

In the concentration analysis solution obtained by the method of the present invention, the concentration of the analysis solute is increased, and the sensitivity of the analysis scheduled for after concentration is improved. As used herein, the term "sensitivity improvement rate" is used in place of the term "concentration magnification." This "sensitivity improvement rate" is equal to the "analysis solute concentration magnification" described above.

As described above, in the first aspect of the present invention, the sensitivity improvement rate is preferably 2.0 to less than 2,000, and in the second aspect, is preferably 1.5 to less than 2,000, more preferably 2.0 to less than 1,000, and further preferably 5.0 to less than 500. The more preferable sensitivity improvement rate varies depending on the type of the analysis solution. The preferred sensitivity improvement rates for each type of analysis solution are listed below.

Natural water such as pond water, river water, seawater, and treated water from water treatment plants and sewage treatment plants: 5.0-fold to less than 1,000-fold

Sewage, agricultural water, fishery water for aquaculture, factory wastewater, production process cleaning rinse liquids: 5.0-fold to less than 1,000-fold

Biological fluids such as blood, urine, tears, and sweat: 2.0-fold to less than 50-fold

Process solutions in pharmaceutical production, cosmetic production, and chemical production: 2.0-fold to less than 500-fold

<<Concentration Device>>

The concentration method according to the first aspect of the present invention is preferably carried out using, for example, a concentration device comprising a forward osmosis membrane module including a forward osmosis membrane, an analysis solution tank, analysis solution feed piping, a draw solution tank, and draw solution feed piping. This concentration device may further comprise an analysis solution feed pump and a draw solution feed pump.

In this concentration device, the "dead volume", which is defined as the sum of the volume of the analysis solution passage part of the forward osmosis membrane module and the volume of the analysis solution feed piping, is 500 mL or less. When concentrating an analysis solution, it is difficult to make the volume of the analysis solution after concentration smaller than the dead volume of the concentration device. Specifically, when the volume of the analysis solution becomes smaller than the dead volume, the amount of liquid in the device becomes insufficient and the analysis solution cannot be circulated. Thus, it is preferable to set the dead volume of the concentration device to 500 mL or less, since it is possible to concentrate the analysis solution to this volume, and therefore, a high sensitivity improvement rate can be obtained.

The dead volume of the concentration device is 500 mL or less, preferably 300 mL or less, more preferably 100 mL or less, further preferably 50 mL or less, particularly preferably 30 mL or less, and most preferably 15 mL or less.

Though it is preferable that the dead volume of the concentration device be small, it is virtually impossible to reduce this value to zero. Even if the dead volume of the concentration device is 0.02 mL or more, 0.1 mL or more, 0.5 mL or more, 1 mL or more, 3 mL or more, 5 mL or more, or 10 mL or more, the effects of the present invention are not impaired.

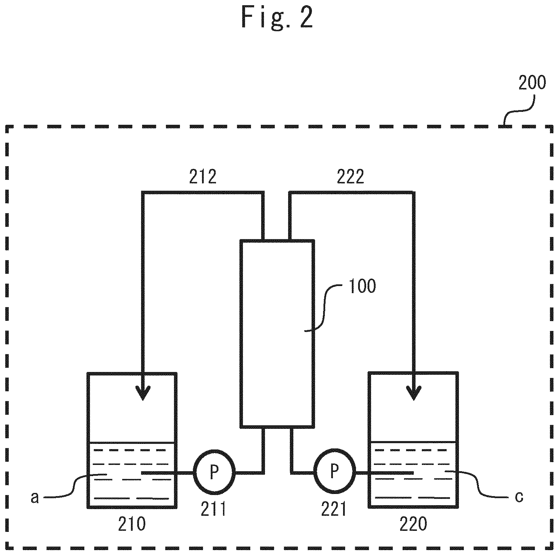

FIG. 2 is a schematic diagram showing an example of the structure of a concentration device used in the concentration method according to the first aspect of the present invention.

The concentration device (200) in FIG. 2 comprises a forward osmosis membrane module (100), an analysis solution tank (210), an analysis solution feed pump (211), analysis solution feed piping (212), a draw solution tank (220), a draw solution feed pump (221), and draw solution feed piping (222).

The analysis solution (a) is stored in the analysis solution tank (210), and is fed to the forward osmosis membrane module (100) by the analysis solution feed pump (211). The analysis solution (a) is fed through the analysis solution feed piping (212) which connects the analysis solution tank (210) and the analysis solution feed pump (211), the analysis solution feed pump (211) and the forward osmosis membrane module (100), and the forward osmosis membrane module and the analysis solution tank.

The draw solution (c) is stored in the draw solution tank (220), and is fed to the forward osmosis membrane module (100) by the draw solution feed pump (221). The draw solution (c) is fed through the draw solution feed piping (222) which connects the draw solution tank (220) and the draw solution feed pump (221), the draw solution feed pump (221) and the forward osmosis membrane module (100), and the forward osmosis membrane module and the draw solution tank.

The bottom of the analysis solution tank (210) may be conical. When the bottom of the analysis solution tank (210) is conical, even if the volume of analysis solution (a) decreases as concentration progresses, the analysis solution (a) collected in the conical part of the bottom of the tank can be delivered. Thus, it is preferable that the bottom of the analysis solution tank (210) be conical because concentration can be continued until the amount of the analysis solution (a) becomes very small.

The bottom of the draw solution tank (220) may be conical, in the same manner as the bottom of the analysis solution tank (210). When the bottom of the draw solution tank (220) is conical, by installing the end of the draw solution feed piping (222) near the bottom of the draw solution tank (220), even when the amount of the draw solution (c) is small, the draw solution (c) collected in the conical portion at the bottom of the draw solution tank (220) can be transferred without mixing of air bubbles, which is preferable. This aspect is advantageous in that efficient concentration can be achieved even when a small amount of draw solution (c) is used during concentration.

The analysis solution feed pump (211) and the draw solution feed pump (221) may be appropriately selected in consideration of the type of analysis solution (a) or draw solution (c), the flow rate of the liquid, and the scale of the concentration device (200).

The analysis solution feed pump (211) and draw solution feed pump (221) are each preferably:

a tube pump or peristaltic pump from the perspective of avoiding contact with parts other than the liquid delivery piping;
a diaphragm pump from the viewpoint of enabling construction from fluorine-based materials which have reduced solute adsorption; or
a piezo pump or bimor pump from the viewpoint of small size and high workability.

The driving power of the analysis solution feed pump (211) and the draw solution feed pump (221) is preferably 500 W or less, more preferably 100 W or less, and further preferably 50 W or less. By using a small pump which requires less driving power, the overall size of the concentration device can be reduced, which is preferable from the viewpoint of improving workability and operability of concentration. By reducing the size of the concentration device, it becomes possible to arrange a large number of concentration devices in a limited space, and it is possible to simultaneously operate and concentrate a large number of samples.

The analysis solution feed pump (211) and the draw solution feed pump (221) may each be driven by a mobile battery. Concentration devices which include a pump capable of being powered by a mobile battery can be used in locations without a fixed power source, whereby analysis solutions can be concentrated anywhere. Possible locations for using a concentration device including a mobile battery-powered pump include, for example, at the analysis solution collection site or in a cold storage.

The pump drive unit and power supply unit of the analysis solution feed pump (211) and the draw solution feed pump (221) may be covered with a partition wall such as an acrylic plate.

The partition wall may include one or more gas inlets and one or more gas outlets. An inert gas such as nitrogen may be introduced into the space covered by the partition wall from the gas introduction part and discharged from the gas discharge part to fill the space covered by the partition wall with the inert gas. In this case, a flow rate adjusting means such as a flow meter or a flow controller may be provided in order to adjust at least one of the introduction speed and the discharge speed of the inert gas.

As a result of the above, the space surrounding the pump drive unit and power supply unit of the liquid pump can be filled with inert gas. By filling the space around the pump drive unit and power supply unit of the liquid pump with inert gas, even if a flammable substance such as an organic solvent is used as at least one of the analysis solvent and the induction solvent, oxygen, which supports combustion, can be removed from the ignition source, reducing the risk of ignition and explosion, which is preferable.

In the concentration device (200) of FIG. 2, the total volume of the portion of the forward osmosis membrane module (100) where the analysis solution is arranged or passed through, and the volume of the analysis solution feed piping (212) is the dead volume.

<<Concentration Kit>>

In the second aspect of the present invention, application to a small amount of analysis solution with an analysis solution amount Vf of 50 mL or less is planned. Thus, it is convenient that the concentration method according to the second aspect of the present invention be carried out using a small concentration kit which has a structure that allows the analysis solution and the draw solution to come into contact via the forward osmosis membrane.

The concentration to which the second aspect of the present invention is applied is:

a concentration kit for carrying out the concentration method according to the second aspect of the present invention, wherein
the concentration kit has a structure which enables the analysis solution and the draw solution to be brought into contact with each other via a forward osmosis membrane, whereby the analysis solvent in the analysis solution is removed by passing through the forward osmosis membrane and moving into the drawing solvent,
the concentration kit does not comprise a circulation means, and
the amount Vf of the analysis solution which can be filled into the concentration kit is 0.01 mL to 50 mL.

The forward osmosis membrane used in this concentration kit may have a hollow fiber shape, a tubular shape, or a flat membrane shape.

When the forward osmosis membrane is hollow fiber-shaped or tubular, the concentration kit to which the second aspect of the present invention is applied may have a structure in which the analysis solution is arranged in the inner space of the hollow fiber or tubular forward osmosis membrane, and the analysis solution-containing forward osmosis membrane can be immersed in a draw solution.

Examples of the structure in which the analysis solution is arranged in the inner space of the hollow fiber-shaped or tubular forward osmosis membrane and the analysis solution-containing forward osmosis membrane can be immersed in the draw solution of the concentration kit of this aspect include the following aspects.

A concentration kit (first concentration kit) having a structure:

composed of one or more hollow fiber or tubular forward osmosis membranes and a container,
wherein an analysis solution is arranged in the inner space of the hollow fiber or tubular forward osmosis membrane to form an analysis solution-containing forward osmosis membrane, and
a draw solution is arranged in the container, and the forward osmosis membrane containing the analysis solution can be immersed in the draw solution; or
a concentration kid (second concentration kit) having a structure:

one or more hollow fiber or tubular forward osmosis membranes are housed in a cylindrical housing in the form of a forward osmosis membrane module;
wherein an analysis solution is arranged in the inner space of the hollow fiber or tubular forward osmosis membrane to form an analysis solution-containing forward osmosis membrane,
the draw solution is arranged in the inner space of the housing and the outer space of the forward osmosis membrane containing the analysis solution, and the forward osmosis membrane containing the analysis solution is immersed in the draw solution.

In the first concentration kit, the number of the hollow fiber or tubular forward osmosis membranes is preferably set such that the ratio of the volume Vf of the analysis solution used in the first concentration kit and the total effective membrane area M of the forward osmosis membrane becomes a predetermined value.

Examples of the container in which the draw solution is arranged include a petri dish.

The amount of draw solution is preferably 0.2-fold to 100-fold the amount of analysis solution.

It is preferable that the amount of the draw solution be sufficient to immerse at least a portion of the forward osmosis membrane containing the analysis solution. In this case, it is preferable that the longitudinal center of the analysis solution-containing forward osmosis membrane be immersed in the draw solution, and both ends of the analysis solution-containing forward osmosis membrane be not immersed in the draw solution but arranged outside the draw solution, and it is preferable that both ends of the forward osmosis membrane containing the analysis solution be held at a higher position than the center, which is immersed in the draw solution. According to such an aspect, when the analysis solution in the part immersed in the draw solution is concentrated and the volume is reduced, the analysis solution in the part not immersed in the draw solution is sequentially replenished and moved to a position where it can be concentrated.

Alternatively, a tube or a syringe may be connected to one end of the hollow fiber or tubular forward osmosis membrane to hold solution which does not fit into the inner space of the forward osmosis membrane. In this case, when the analysis solution in the inner space of the forward osmosis membrane is concentrated and its volume is reduced, the analysis solution held in the tube or syringe is replenished and moved into the inner space of the forward osmosis membrane in a position where it can be concentrated.

In preferred aspect, after arranging the analysis solution within the inner space of the hollow fiber or tubular forward osmosis membrane, the end that is not connected to the tube or syringe is sealed. In this aspect, the analysis solution in the tube or syringe is sequentially replenished by the volume reduced as the analysis solution is concentrated. Thus, by tracking the amount of decrease in the analysis solution in the tube or syringe, it is possible to understand the degree of concentration of the analysis solution. The decrease in the amount of analysis solution in the tube or syringe can be tracked, for example, by reading a scale attached to the tube or syringe in advance.

Filling the inner space of a hollow fiber or tubular forward osmosis membrane with an analysis solution, or recovering the concentration analysis solution from a forward osmosis membrane containing an analysis solution after concentration, or both may be carried out, for example, with a syringe. It is also preferable to connect the hollow fiber or tubular forward osmosis membrane and the syringe in advance via a suitable tube as necessary.

The number of hollow fiber or tubular forward osmosis membranes in the second concentration kit is the same as the case of the first concentration kit.

In the second concentration kit, in order to retain the draw solution in the inner space of the housing and the outer space of the forward osmosis membrane containing the analysis solution, both ends of the forward osmosis membrane may be affixed inside the housing with an adhesive layer. With this configuration, the space within the housing can be divided into two by the forward osmosis membrane into an analysis solution arrangement space where an analysis solution is arranged and a draw solution arrangement space where a draw solution is arranged. In this case, the housing may have one or more holes for filling and discharging the draw solution. For example, the housing may have two holes, one hole for filling and discharging the draw solution, and the other hole for the introduction and discharge of air when filling and discharging the draw solution. As concentration of the analysis solution progresses, the amount of the draw solution increases, whereby by tracking the amount of the draw solution, it is possible to understand the degree of concentration of the analysis solution. Examples of methods for tracking the amount of draw solution include a method of quantifying the amount of draw solution discharged outside the housing.

In the second concentration kit, it is also preferable to connect a tube to one or both ends of the forward osmosis membrane and hold the open end of the tube at a higher position than the end of the forward osmosis membrane. In this case, excess analysis solution may be arranged in the tube. According to this aspect, when the analysis solution in the housing is concentrated and the volume thereof is reduced, the analysis solution in the transparent tube is sequentially replenished into the housing and moved to a position where it can be concentrated. By tracking this replenishment amount, the degree of concentration of the analysis solution can be determined.

When the forward osmosis membrane is a flat membrane, the concentration kit to which the second aspect of the present invention is applied may be:

> a concentration kit (third concentration kit) which
> has one or more partition structures for storing an analysis solution on one side of a flat forward osmosis membrane, and which has a structure whereby:
>
>> the analysis solution stored in the partition structure can come into contact with one side of the flat forward osmosis membrane, and
>> the other surface of the flat forward osmosis membrane allows the draw solution to come into contact with the other surface.

The capacity of one partition is preferably 0.01 mL to 50 mL, more preferably 0.02 mL to 40 mL, further preferably 0.05 mL to 30 mL, particularly preferably 0.10 mL to 20 mL, and may be 0.15 mL to 15 mL, or 0.20 mL to 10 mL.

The number of partitions in the third concentration kit is preferably 1 to 100, and may be, for example, 1 to 50, 1 to 30, 1 to 20, or 1 to 10.

The amount of draw solution is preferably 0.2-fold to 1,000-fold the total amount of analysis solution to be concentrated.

When the third concentration kit has a plurality of partition structures, each partition may contain the same type of analysis solution for concentration, or may contain different types of analysis solutions to simultaneously concentrate a plurality of analysis solutions.

This third concentration kit may be, for example, a combination of a resin plate having a partition structure and a vat of an appropriate size. The third concentration kit may be constructed by applying a commercially available cell culture set.

<Analysis Method>

According to another aspect of the present invention, there is provided an analysis method in which an analysis solution containing an analysis solute and an analysis solvent is subjected to instrumental analysis after being concentrated by the concentration method of the present invention.

The instrumental analysis in the analysis method of the present invention may be, for example, one or more types of analysis selected from the group consisting of liquid chromatography, gas chromatography, inductively-coupled plasma analysis, atomic absorption spectrometry, and ion chromatography. Examples of liquid chromatography include liquid chromatography mass spectrometry (LC/MS) and high performance liquid chromatography (HPLC); examples of gas chromatography include gas chromatography mass spectrometry (GC/MS); examples of inductively-coupled plasma analysis include high frequency inductively coupled plasma optical emission spectroscopy (ICP-OES/ICP-AES), and inductively-coupled plasma mass spectrometry (ICP-MS).

The analysis device used in the analysis method of the present invention is preferably small and portable. It is preferable that the analyzer be portable since it can be used in locations without a fixed power supply, whereby the analysis method of the present invention can be carried out at the site where the analysis solution is collected.

EXAMPLES

Hereinafter, the present invention will be specifically described based on Examples, but the present invention is not limited to the Examples below.

<Measurement Method of Each Physical Property>

First, the methods for measuring and calculating each physical property will be described.

(1) Osmotic Pressure of Draw Solution

The osmotic pressure of each draw solution was calculated using the Van't Hoff equation shown in formula (1) above.

(2) Theoretical Concentration Magnification

Theoretical concentration magnification was calculated according to the following formula:

Theoretical concentration magnification (fold) = volume of analysis solution / volume of concentration analysis solution

(3) Sensitivity Improvement Rate (Analysis Solute Concentration Magnification)

The sensitivity improvement rate was calculated according to the following formula based on the concentration of the analysis solute measured by LC/MS for the analysis solution before and after concentration, and evaluated using the following criteria.

Sensitivity improvement rate (fold) = concentration of analysis solute in concentration analysis solution / concentration of analysis solute in analysis solution

A: When the sensitivity improvement rate is 8-fold or more
B: When the sensitivity improvement rate is 6-fold to less than 8-fold
C: When the sensitivity improvement rate is 4-fold to less than 6-fold
D: When the sensitivity improvement rate is 2-fold to less than 4-fold
E: When the sensitivity improvement rate is less than 2-fold
F: When concentration to 10-fold the theoretical concentration magnification cannot be achieved

<<Reference Examples 1 to 10 and Reference Comparative Examples 1 to 4 >>

<<Reference Example 1>>

(1) Production of Hollow Fiber Forward Osmosis Membrane Module

(1-1) Production of Hollow Fiber Support Layer Module

Polyether sulfone (PES: Produced by BASF, trade name "Ultrason") was dissolved in N-methyl-2-pyrrolidone (Produced by Wako Pure Chemical Industries, Ltd.) to prepare a 20% by mass hollow fiber spinning stock solution. The above stock solution was discharged from the outer spindle of a wet hollow fiber spinning machine equipped with a double spinneret, and a mixture of water: triethylene glycol = 50:50 (weight ratio) was discharged from the inner spindle, and they were extruded into a coagulation tank filled with water to form hollow fibers by phase separation. The obtained hollow fibers were wound on a winding machine. The outer diameter of the obtained hollow fiber was 1.0 mm, the inner diameter was 0.7 mm, and the diameter of the pores on the inner surface was 0.05 $\mu$m. These hollow fibers were used as a hollow fiber support layer.

The above hollow fiber support layer was cut into 20 cm pieces, 130 thereof were packed into a cylindrical plastic housing having a diameter of 2 cm and a length of 10 cm, and both ends were affixed with an adhesive layer to produce a hollow fiber support layer module having an effective membrane inner surface area of 0.023 $m^2$.

(1-2) Formation of Separation Active Layer (Production of Hollow Fiber Forward Osmosis Membrane Module)

A 1 L container was charged with 10 g of m-phenylenediamine and 0.8 g of sodium lauryl sulfate, and 489.2 g of pure water was added thereto for dissolution to prepare 0.5 kg of a first solution for interfacial polycondensation.

Another 1 L container was charged with 0.8 g of trimesic acid chloride, and 399.2 g of n-hexane was added thereto for dissolution to prepare 0.4 kg of a second solution used for interfacial polycondensation.

The core side (inside the hollow fibers) of the hollow fiber support layer module described above was filled with the first solution, allowed stand for 5 minutes, and the liquid was then removed to form a thin liquid film of the first solution on the inside of the hollow fiber support layer.

Next, the core side pressure was set to normal pressure, and the shell side pressure was set to a reduced pressure of 10 kPa as an absolute pressure. After standing in this state for 5 minutes, the second solution was fed to the core side for 3 minutes at a flow rate of 130 mL/min while maintaining this pressure to carry out interfacial polycondensation. The interfacial polycondensation temperature was 25°C.

Next, the hollow fiber support layer module was left standing in a constant temperature bath set at 50°C for 5 minutes to vaporize and remove n-hexane. Furthermore, by cleaning both the shell side and the core side with pure water, a hollow fiber forward osmosis membrane containing a separation active layer composed of a polyamide on the inner surface of a hollow fiber support layer made of polyethersulfone was formed.

In the obtained hollow fiber forward osmosis membrane module, the ratio Vx/Vy of the total volume Vx ($cm^3$) of the two spaces formed by the end surface of the adhesive layer and the inner surface of the lid to the internal volume Vy ($cm^3$) of the hollow fiber membrane was 0.52, and the volume Vm of the portion through which the analysis solution passed within the hollow fiber forward osmosis membrane module was 0.005 (L).

(2) Concentration

The hollow fiber forward osmosis membrane module obtained above was incorporated into a concentration device having the configuration shown in FIG. 2, an analysis solution was concentrated, and the concentration analysis solution was analyzed.

200 mL of a 10 ppm L-phenylalanine aqueous solution prepared with L-phenylalanine (manufactured by Tokyo Chemical Industry Co., Ltd.) and ion-exchanged water was used as the analysis solution, and 1,000 mL of a 10% by mass $MgCl_2$ aqueous solution prepared from magnesium chloride hexahydrate and ion-exchanged water was used as the draw solution.

The analysis solution was flowed inside the hollow fiber at a linear speed of 3.4 cm/s, and the draw solution was flowed outside the hollow fiber at a linear speed of 2.0 cm/s to concentrate the analysis solution. The concentration temperature was 25°C. The concentration operation was carried out until the theoretical concentration magnification increased 10-fold to obtain a concentration analysis solution, and the osmotic pressure and sensitivity improvement rate of the draw solution were calculated by the method described above.

The evaluation results are summarized in Table 1.

<<Reference Example 2>>

In Reference Example 2, concentration and evaluation were carried out in the same manner as Reference Example 1, except that a 10 ppm methanol solution of L-phenylalanine was used as the analysis solution, and a 10% by mass methanol solution prepared from anhydrous magnesium chloride and methanol was used as the draw solution.

The evaluation results are summarized in Table 1.

<<Reference Example 3>>

In Reference Example 3, a hollow fiber forward osmosis membrane module was produced and concentration and evaluation were carried out in the same manner as Reference Example 1, except that during interfacial polycondensation for hollow fiber forward osmosis membrane production, a solution prepared using 2.5 g of m-phenylenediamine, 0.8 g of sodium lauryl sulfate, and 496.7 g of pure water was used as the first solution.

The evaluation results are summarized in Table 1.

<<Reference Example 4>>

In Reference Example 4, concentration and evaluation were carried out in the same manner as Reference Example 1, except that the amount Vf of the analysis solution was 8.00 L.

The evaluation results are summarized in Table 1.

<<Reference Example 5>>

In Reference Example 5, a hollow fiber forward osmosis membrane module was produced in the same manner as Reference Example 1 and concentration and evaluation were carried out in the same manner as Reference Example 4, except that production of the hollow fiber support layer module, the number of hollow fiber support layers accommodated in the housing was changed to 26.

The evaluation results are summarized in Table 1.

<<Reference Example 6>>

(1) Production of Flat Forward Osmosis Membrane Module

A polysulfone flat membrane (produced by Sepro Membrane Co., Ltd., trade name "PS30", 210 mm × 297 mm, thickness 190 μm) was immersed in a first solution prepared in the same manner as in Reference Example 1. Thereafter, excess droplets on the surface of the flat membrane were removed to form a thin liquid film of the first solution on the surface of the flat membrane.

Next, a second solution prepared in the same manner as in Reference Example 1 was poured onto one side of the flat membrane and allowed to stand for 30 seconds to carry out interfacial polycondensation. The interfacial polycondensation temperature was 25°C.

After removing the second solution from the membrane after interfacial polycondensation, it was left standing in a constant temperature bath set at 50°C for 5 minutes to vaporize and remove the n-hexane. By cleaning both sides of the membrane with pure water, a flat forward osmosis membrane having a separation active layer composed of a polyamide on one side of the flat membrane composed of a polysulfone was produced.

The central part of the obtained flat forward osmosis membrane was cut to a size of 92 mm × 46 mm and set in an acrylic cell "CF042D-FO" produced by Sterlitech to produce a flat forward osmosis membrane module. The effective membrane area of the flat forward osmosis membrane in this module was 42 cm$^2$. This module was configured such that the analysis solution passed through the space on the separation active layer side of the forward osmosis membrane, and the volume Vm of the space through which the analysis solution passed was 0.017 (L).

(2) Concentration

The flat forward osmosis membrane module obtained as described above was assembled into a concentration device having the configuration shown in FIG. 2, and using 2.1 L of a 10 ppm L-phenylalanine aqueous solution as the analysis solution, concentration and evaluation of the analysis solution and the draw solution were carried out under conditions of a countercurrent flow at a flow rate of 200 mL/min (per unit effective membrane area of forward osmosis membrane, 4.76 mL/(min × cm$^2$)). The concentration temperature was 25°C.

<<Reference Example 7>>

In Reference Example 7, a hollow fiber forward osmosis membrane module was produced and concentration and evaluation were carried out in the same manner as Reference Example 1, except that during interfacial polycondensation for hollow fiber forward osmosis membrane production, 10 g of 1,6-diaminohexane were used as the first solution in place of the 10 g of m-phenylenediamine.

The evaluation results are summarized in Table 1.

<<Reference Comparative Example 1>>

In Reference Comparative Example 1, a hollow fiber forward osmosis membrane module was produced and concentration and evaluation were carried out in the same manner as Reference Example 1, except that during interfacial polycondensation for hollow fiber forward osmosis membrane production, a solution prepared using 1.0 g of m-phenylenediamine, 2.5 g of sodium lauryl sulfate, and 496.5 g of pure water was used as the first solution.

The evaluation results are summarized in Table 1.

<<Reference Comparative Example 2>>

In Reference Comparative Example 2, concentration and evaluation were carried out in the same manner as Reference Example 1, except 1,000 mL of a 1% by mass $MgCl_2$ aqueous solution was used as the draw solution in place of the 1,000 mL of 10% by mass $MgCl_2$ aqueous solution of Reference Example 1.
The evaluation results are summarized in Table 1.

<<Reference Comparative Examples 3 and 4>>

In these Reference Comparative Examples, concentration and evaluation were carried out in the same manner as in Reference Example 1, except that the amount Vf of the analysis solution was set as shown in Table 1.
The evaluation results are summarized in Table 1.

<<Reference Examples 8 to 10>>

In these Reference Examples, hollow fiber forward osmosis membrane modules were produced and concentration and evaluation were carried out in the same manner as Reference Example 1, except that the ratios Vx/Vy of the internal volumes Vy ($cm^3$) of the hollow fiber membranes were adjusted as shown in Table 2 by changing the total capacity Vx ($cm^3$) of the two spaces formed by the end surface of the adhesive layer and the inner surface of the lid by changing the shape and size of the lid used in each hollow fiber forward osmosis membrane module.
The evaluation results of the sensitivity improvement rate are summarized in Table 2 along with the results of Reference Example 1.

[Table 1]

Table 1

| | Forward osmosis membrane module | | | Analysis solution | | | | | Vf/Vm | Vf/M | Draw solution | | | | Sensitivity improvement rate |
|---|---|---|---|---|---|---|---|---|---|---|---|---|---|---|---|
| | Forward osmosis membrane shape | Effective membrane area M (M$^2$) | Analysis solution passage part volume Vm (L) | Analysis solute | Concentration | Analysis solvent | Amt Vf (L) | | | | Draw solute | Concentration | Solvent | Osmotic pressure (MPa) | |
| Ref Ex 1 | Hollow fiber | 0.023 | 0.005 | L-Phe | 10 ppm | Water | 0.20 | 40 | 8.70 | MgCl$_2$ | 10 wt% | Water | 8.67 | A |
| Ref Ex 2 | Hollow fiber | 0.023 | 0.005 | L-Phe | 10 ppm | MeOH | 0.20 | 40 | 8.70 | MgCl$_2$ | 10 wt% | MeOH | 6.86 | A |
| Ref Ex 3 | Hollow fiber | 0.023 | 0.005 | L-Phe | 10 ppm | Water | 0.20 | 40 | 8.70 | MgCl$_2$ | 10 wt% | Water | 8.67 | B |
| Ref Ex 4 | Hollow fiber | 0.023 | 0.005 | L-Phe | 10 ppm | Water | 8.00 | 1600 | 348 | MgCl$_2$ | 10 wt% | Water | 8.67 | B |
| Ref Ex 5 | Hollow fiber | 0.0046 | 0.001 | L-Phe | 10 ppm | Water | 8.00 | 8000 | 1739 | MgCl$_2$ | 10 wt% | Water | 8.67 | C |
| Ref Ex 6 | Flat | 0.0042 | 0.017 | L-Phe | 10 ppm | Water | 210 | 124 | 500 | MgCl$_2$ | 10 wt% | Water | 8.67 | C |
| Ref Ex 7 | Hollow fiber | 0.023 | 0.005 | L-Phe | 10 ppm | Water | 0.20 | 40 | 8.70 | MgCl$_2$ | 10 wt% | Water | 8.67 | D |
| Ref Comp Ex 1 | Hollow fiber | 0.023 | 0.005 | L-Phe | 10 ppm | Water | 0.20 | 40 | 8.70 | MgCl$_2$ | 10 wt% | Water | 8.67 | E |
| Ref Comp Ex 2 | Hollow fiber | 0.023 | 0.005 | L-Phe | 10 ppm | Water | 0.20 | 40 | 8.70 | MgCl$_2$ | 1 wt% | Water | 0.79 | E |
| Ref Comp Ex 3 | Hollow fiber | 0.023 | 0.005 | L-Phe | 10 ppm | Water | 50.00 | 10000 | 2173 | MgCl$_2$ | 10 wt% | Water | 8.67 | E |

(continued)

| | Forward osmosis membrane module | | | Analysis solution | | | | Vf/Vm | Vf/M | Draw solution | | | | Sensitivity improvement rate |
| --- | --- | --- | --- | --- | --- | --- | --- | --- | --- | --- | --- | --- | --- | --- |
| | Forward osmosis membrane shape | Effective membrane area M ($M^2$) | Analysis solution passage part volume Vm (L) | Analysis solute | Concentration | Analysis solvent | Amt Vf (L) | | | Draw solute | Concentration | Solvent | Osmotic pressure (MPa) | |
| Ref Comp Ex 4 | Hollow fiber | 0.023 | 0.005 | L-Phe | 10 ppm | Water | 0.00005 | 0.01 | 0.002 | $MgCl_2$ | 10 wt% | Water | 8.67 | F |

Table 2

|  | Vx/Vy | Concentration improvement rate |
|---|---|---|
| Ref Ex 1 | 0.520 | A |
| Ref Ex 8 | 0.080 | A |
| Ref Ex 9 | 0.008 | B |
| Ref Ex 10 | 20 | B |

"L-Phe" in Table 1 indicates L-phenylalanine.

<<Examples A-1 to A-3 and Comparative Example a-1>>

In Examples A-1 to A-3 and Comparative Example a-1, concentration of an aqueous solution containing mizoribine (1-($\beta$-D-ribofuranosyl)-5-hydroxyimidazole-4-carboxamide) as a representative example of a low-molecular-weight drug was carried out.
In Example A-1, a model solution prepared from the reagent mizoribine was used as the analysis solution.
in Example A-2, "cleaning rinse liquid A", which is the cleaning water after cleaning a part of a reaction vessel after a mizoribine synthesis reaction in a commercial-scale mizoribine production process, was used as the analysis solution.
In Example A-3 and Comparative Example a-1, "cleaning rinse liquid B", which is the cleaning water after cleaning another part of the reaction vessel after the above-described mizoribine synthesis reaction, was used as the analysis solution.
HPLC analysis was conducted under the following analysis conditions X for the analysis solutions before and after concentration in Examples A-1 to A-3, and the following analysis conditions Y for the analysis solution after concentration using an evaporator in Comparative Example a-1.

<Before Concentration: Analysis Conditions X>

Column: Waters, ACQUITY UPLC HSS T3 1.8 $\mu$m (inner diameter 2.1 mm $\times$ 100 mm)
Column temperature: 40°C
Injection volume: 10 $\mu$L
Mobile phase: 0.1% by mass phosphoric acid aqueous solution
Flow rate: 0.2 mL/min
Detector: Diode array detector (190 to 400 nm)
Detection wavelength: 280 nm

<After Concentration: Analysis Condition Y>

Column: Produced by Tosoh Corporation, TSKgel ODS-100V (inner diameter 4.6 mm $\times$ 250 mm)
Column temperature: 40°C
Injection volume: 20 $\mu$L
Mobile phase: 0.1% by mass phosphoric acid aqueous solution / acetonitrile mixed solution (volume ratio 90/10)
Flow rate: 0.8 mL/min
Detector: Diode array detector (190 to 400 nm)
Detection wavelength: 280 nm

Quantification of the mizoribine concentration in the measurement under analysis conditions X was carried out in accordance with a calibration curve created by subjecting aqueous solutions of mizoribine with concentrations of 0 ppm, 0.01 ppm, 0.02 ppm, 0.05 ppm, 0.1 ppm, and 0.2 ppm, which were prepared using the reagent mizoribine, to HPLC.

Quantification of the mizoribine concentration in the measurement under analysis conditions Y was carried out in accordance with a calibration curve created by subjecting aqueous solutions of mizoribine with concentrations of 0 ppm, 0.05 ppm, 0.1 ppm, and 0.5 ppm, which were prepared using the reagent mizoribine, to HPLC.

Considering the daily error in detection sensitivity of HPLC, a calibration curve was created for each measurement day and quantification was carried out.

Note that for both analysis conditions X and Y, the peak top of the mizoribine peak in the HPLC chart was at an elution time of approximately 3 minutes under analysis condition X, and at an elution time of approximately 4 minutes under analysis condition Y.

<<Example A-1>>

The analysis solution was concentrated using the same hollow fiber forward osmosis membrane module and concentration device as in Reference Example 1, and the concentration analysis solution was analyzed. In this concentration device, the dead volume of the portion through which the analysis solution passed was 15 mL.

1,000 mL of a 0.003 ppm mizoribine aqueous solution prepared with mizoribine (produced by Fuji Film Wako Pure Chemical Industries, Ltd.) and distilled water (produced by Fuji Film Wako Pure Chemical Industries, Ltd.) was used as the analysis solution, and as 1,000 mL of a 20% by mass magnesium chloride aqueous solution prepared from magnesium chloride hexahydrate and distilled water was used as the draw solution.

The analysis solution was flowed inside the hollow fiber at a linear speed of 2.3 cm/s, and the draw solution was flowed outside the hollow fiber at a linear speed of 0.4 cm/s to concentrate the analysis solution. The concentration temperature was 25°C. The analysis solution was concentrated to 15 mL, which is equivalent to the dead volume. After collecting the concentrated solution, the inside of the apparatus was co-washed using 5 mL of distilled water, and together with the co-cleaning solution, a total of 20 mL of concentration analysis solution was obtained. The theoretical concentration magnification was 50-fold gain.

HPLC analysis was carried out on the analysis solution before concentration and the analysis solution after concentration using an HPLC device "Nexera" Produced by Shimadzu Corporation. Regarding the analysis conditions, the above-described analysis conditions X were adopted for both the analysis solution before concentration and the post-concentration analysis solution, and each analysis was carried out twice (n=2).

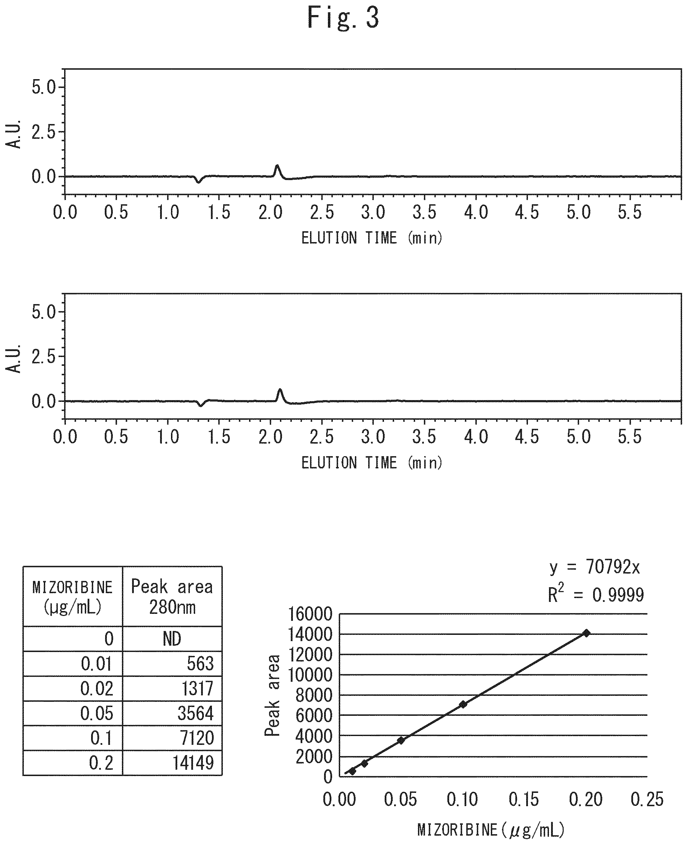

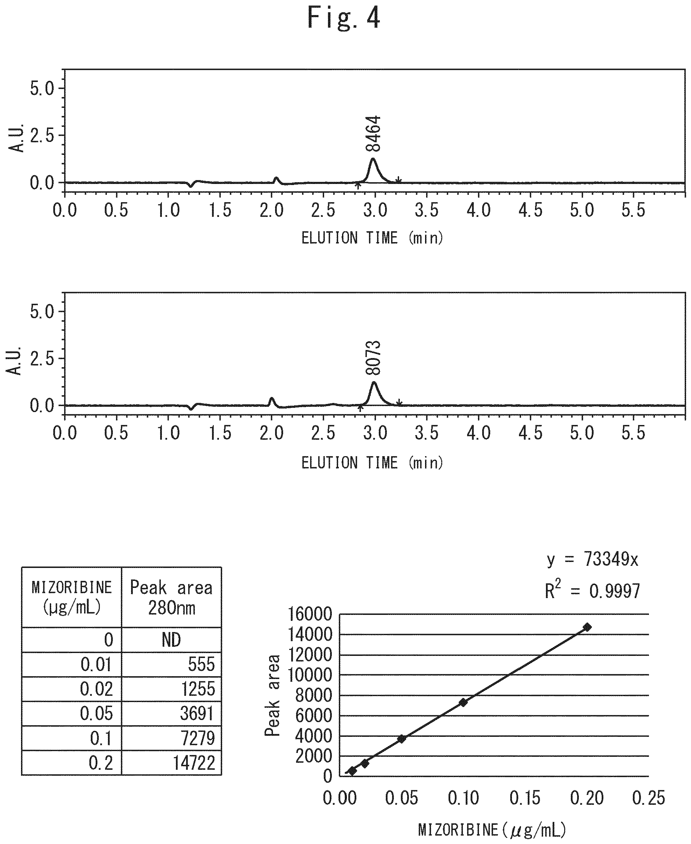

An HPLC chart of the analysis solution before concentration is shown in FIG. 3, and an HPLC chart of the analysis solution after concentration is shown in FIG. 4, each together with the calibration curve used for quantification.

In the HPLC chart of the analysis solution before concentration shown in FIG. 3, there is no mizoribine peak seen at an elution time of approximately 3 minutes, but in the HPLC chart of the analysis solution after concentration shown in FIG. 4, a mizoribine peak can be seen.

The mizoribine concentration in the analysis solution after concentration was calculated from the HPLC chart using the calibration curve to be 0.113 ppm as the average value of the two measurements. The sensitivity improvement rate (analysis solute concentration magnification) calculated from this value and the theoretical value (0.003 ppm) of the mizoribine concentration in the analysis solution before analysis was 37.7-fold.

<<Reference Example A-2>>

In Reference Example A-2, concentration and evaluation were carried out in the same manner as in Example A-1, except that the "cleaning rinse liquid A" was used as the analysis solution.

The analysis solution before concentration and the analysis solution after concentration were subjected to HPLC analysis in the same manner as in Example A-1, with each measurement being carried out twice (n=2).

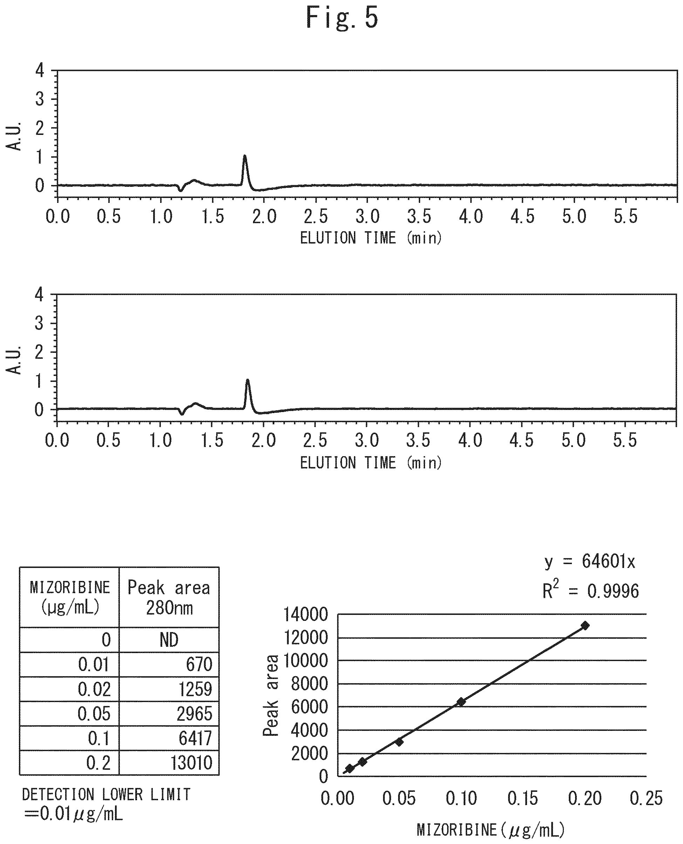

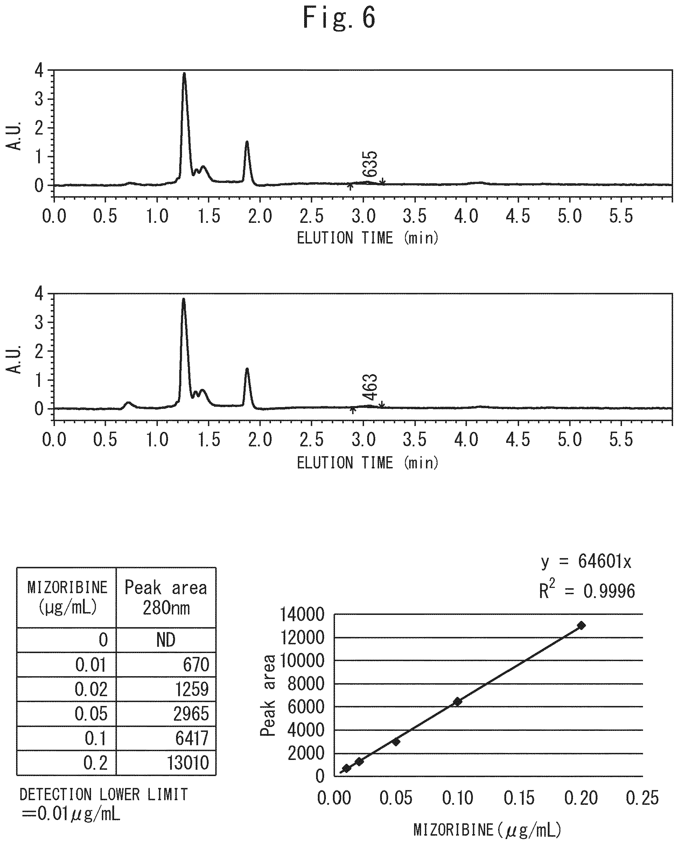

An HPLC chart of the analysis solution before concentration is shown in FIG. 5, and an HPLC chart of the analysis solution after concentration is shown in FIG. 6, each together with the calibration curve used for quantification.

According to HPLC analysis, no mizoribine was detected in the analysis solution before concentration (approximately 0 ppm) in both cases, but mizoribine was detected in the post-concentration analysis solution at an average value of 0.008 ppm as measured twice.

<<Example A-3>>

In Example A-3, concentration and evaluation were carried out in the same manner as in Example A-1, except that the "cleaning rinse liquid B" was used as the analysis solution.

The analysis solution before concentration and the analysis solution after concentration were subjected to HPLC analysis in the same manner as in Example A-1, with each measurement being carried out twice (n=2).

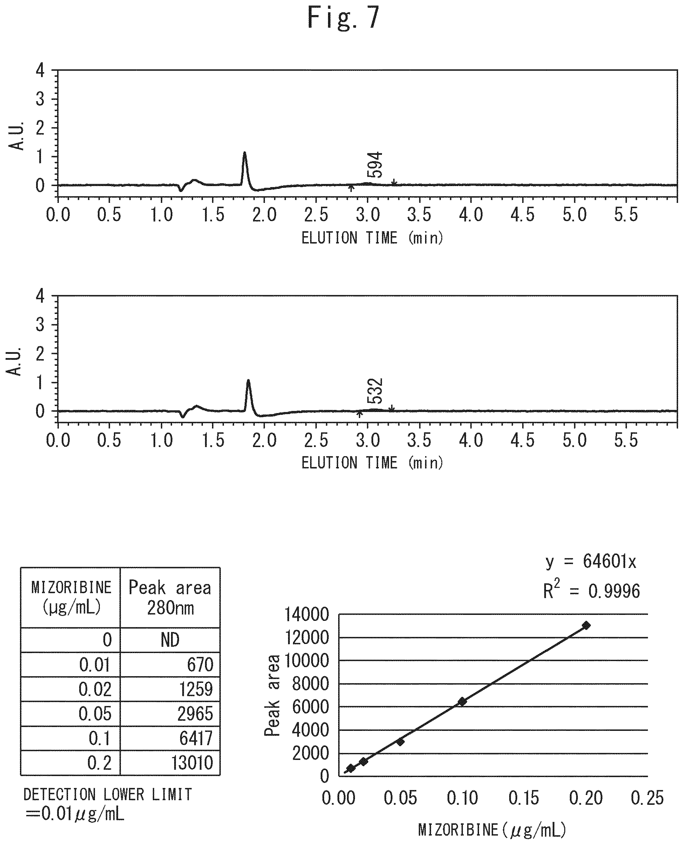

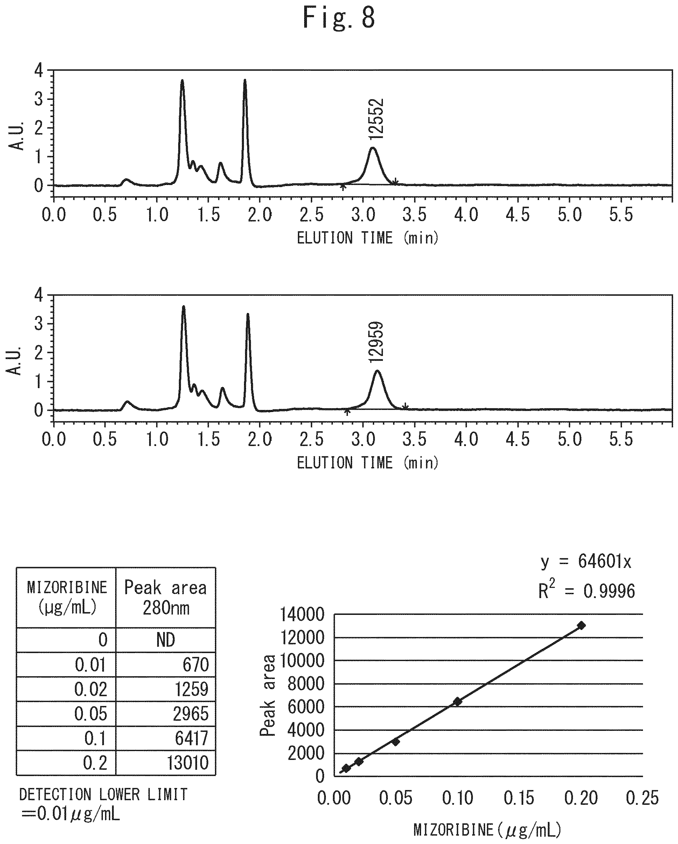

An HPLC chart of the analysis solution before concentration is shown in FIG. 7, and an HPLC chart of the analysis solution after concentration is shown in FIG. 8, each together with the calibration curve used for quantification.

According to HPLC analysis, the mizoribine concentration in the analysis solution before concentration was 0.009 ppm, and the mizoribine concentration in the post-concentration analysis solution was 0.197 ppm, as an average value of two measurements each. The sensitivity improvement rate (analysis solute concentration magnification) calculated from these values was 21.9-fold.

<<Comparative Example a-1>>

In Comparative Example a-1, 1,000 mL of the same "cleaning rinse liquid B" used in Example A-3 was concentrated to 15 mL using a rotary evaporator. After collecting the concentrated solution, the inside of the flask was co-washed using 5 mL of distilled water, and together with the co-cleaning solution, a total of 20 mL of post-concentration analysis solution was obtained. In the concentration step of the evaporator, the water bath was set at 50°C, and concentration was carried out under reduced pressure.

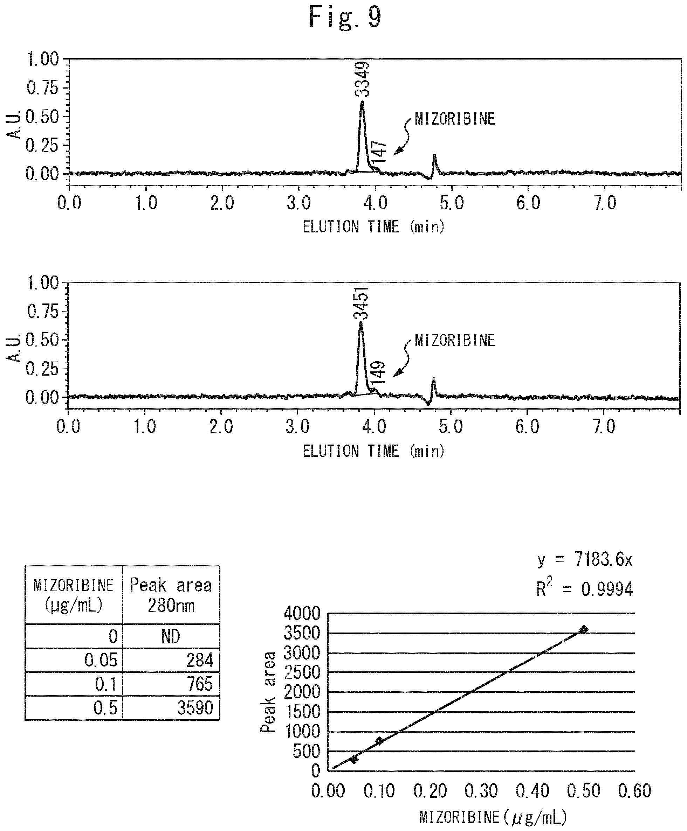

The analysis solution after concentration was subjected to HPLC analysis in the same manner as in Example A-1 except that analysis conditions Y were used, with two measurements (n=2). The obtained HPLC chart is shown in FIG. 9 together with the calibration curve used for quantification.

According to HPLC analysis, the mizoribine concentration in the analysis solution before concentration was 0.009 ppm as shown in Example A-3, and the mizoribine concentration in the post-concentration analysis solution was 0.021 ppm as the average value of two measurements. The sensitivity improvement rate (analysis solute concentration magnification) was 2.3-fold.

<<Detailed Data of HPLC Analysis>>

The quantitative values of mizoribine concentration (each n=2) determined by HPLC analysis in Example A-1, Reference Example A-2, Example A-3, and Comparative Example a-1 are shown in Table 3 below.

[Table 3]

Table 3

| | Analysis solution | Concentration method | HPLC analysis conditions | Before concentration | | After concentration | |
|---|---|---|---|---|---|---|---|
| | | | | peak area | Concentration (ppm) | peak area | Concentration (ppm) |
| Ex A-1 | Mizoribine aqueous solution (0.003 ppm) | Forward osmosis | Analysis conditions X | Not detected | 0 | 8464 | 0.1154 |
| | | | | Not detected | 0 | 8073 | 0.1101 |
| Ref Ex A-2 | Cleaning rinse liquid A | Forward osmosis | Analysis conditions X | Not detected | 0 | 635 | 0.0098 |
| | | | | Not detected | 0 | 463 | 0.0072 |
| Ex A-3 | Cleaning rinse liquid B | Forward osmosis | Analysis conditions X | 594 | 0.00919 | 12552 | 0.1943 |
| | | | | 532 | 0.00824 | 12959 | 0.2006 |
| Comp Ex a-1 | Cleaning rinse liquid B | Rotary evaporator | Analysis conditions Y | - | - | 147 | 0.0205 |
| | | | | - | < | 149 | 0.0207 |

<<Example B-1 to B-7, and Comparative Examples b-1 to b-3>>

(1) Production of Hollow Fiber Forward Osmosis Membrane

(1-1) Production of Hollow Fiber Support Layer

A homogeneous polymer solution consisting was prepared from 19% by mass of polysulfone (produced by Solvay Specialty polymers, Udel-P3500), 61% by mass of N-methyl-2-pyrrolidone (produced by Fujifilm Wako Pure Chemical Industries, Ltd.), and 20% by mass of tetraethylene glycol (produced by Tokyo Kasei Co., Ltd.) as a spinning stock solution. This spinning stock solution was filled into a wet hollow fiber spinning machine equipped with a double spinneret. The spinning stock solution at 40°C and an internal coagulating liquid (water) at 25°C were discharged from the double spinneret, and the spinnerets were run for 250 mm in air at a temperature of 30°C and a relative humidity of 98%. Thereafter, it was coagulated in a coagulation bath (external coagulation liquid) filled with water at 30°C, and wound at a tension of 20 g using a free roller as a turn roll to obtain hollow fibers composed of a polysulfone. The obtained hollow fibers had an outer diameter of 1.02 mm, an inner diameter of 0.62 mm, and a membrane thickness of 0.20 mm. These hollow fibers were used as the hollow fiber support layer.

The above hollow fiber support layer was cut into 30 cm pieces, 130 fibers thereof were filled in a cylindrical plastic housing with a diameter of 2 cm and a length of 25 cm, and both ends were affixed with an adhesive to produce a hollow fiber support layer module.

(1-2) Formation of Separation Active Layer (Production of Hollow Fiber Forward Osmosis Membrane)

A 1 L container was charged with 10 g of m-phenylenediamine and 0.8 g of sodium lauryl sulfate, and 489.2 g of pure water was added thereto for dissolution to prepare 0.5 kg of a first solution for interfacial polymerization.

Another 1 L container was charged with 0.8 g of trimesic acid chloride, and 399.2 g of n-hexane was added thereto for dissolution to prepare 0.4 kg of a second solution used for interfacial polymerization.

The core side (inside the hollow fiber) of the hollow fiber support layer module described above was with the first solution, and after standing for 5 minutes, the liquid was removed to form a thin liquid film of the first solution inside the hollow fiber support layer.

Next, the core side pressure was set to normal pressure, and the shell side pressure was set to a reduced pressure of 10 kPa as an absolute pressure. After standing in this state for 5 minutes, the second solution was fed to the core side for 3 minutes at a flow rate of 130 mL/min while maintaining this pressure to carry out interfacial polymerization. The interfacial polymerization temperature was 25°C.

Next, the hollow fiber support layer module was left standing in a constant temperature bath set at 50°C for 5 minutes to vaporize and remove the n-hexane. By cleaning both the shell side and the core side of the module with pure water, a hollow fiber forward osmosis membrane having a separation active layer composed of a polyamide on the inner surface of the hollow fiber support layer composed of a polysulfone was produced.

This module was disassembled, and the hollow fiber forward osmosis membrane was removed and cut to a length of 20 cm.

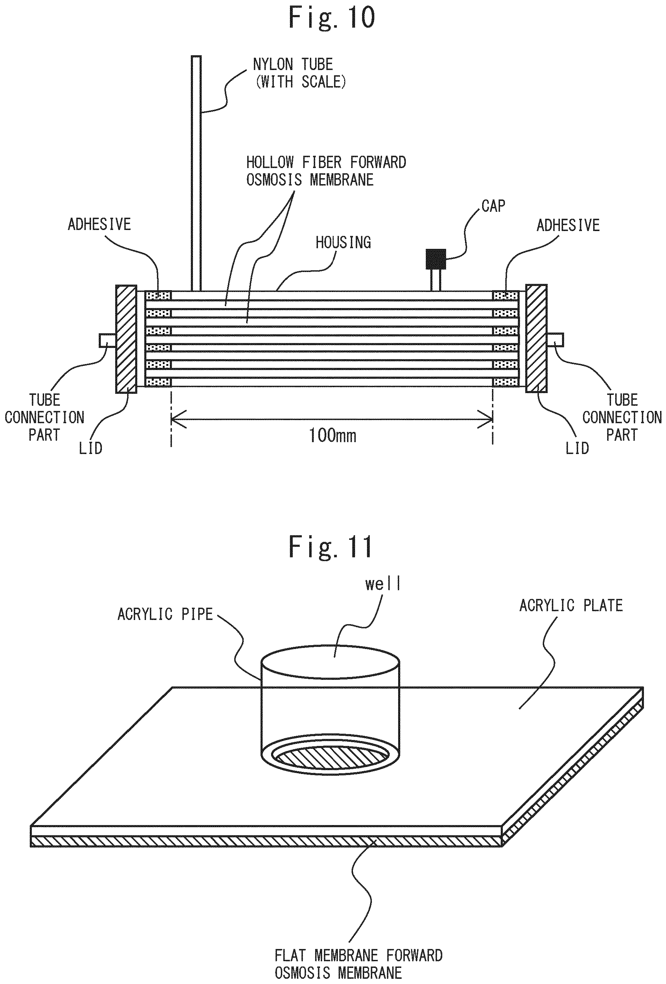

In the following Examples and Comparative Examples, five of the obtained hollow fiber forward osmosis membranes were used as one set, and a small hollow fiber forward osmosis membrane module having the structure shown in FIG. 10 was produced and evaluated.

A housing consisting of an acrylic tube with an inner diameter of 9 mm and an outer diameter of 13 mm is filled with five hollow fiber forward osmosis membranes, and both ends were affixed with adhesive to produce a small hollow fiber forward osmosis membrane module (the membrane area per forward osmosis membrane was 1.947 cm$^2$, and the effective membrane area M per module was 9.73 cm$^2$). The housing of the acrylic tube was provided with holes in two locations on the cylinder wall, and a transparent nylon tube with an inner diameter of 2 mm and a length of 400 mm was connected to one of the holes using an adhesive to serve as a draw solution inlet. This nylon tube was marked with a scale so that the increase in draw solution due to the progress of concentration could be tracked. The other hole in the housing was sealed with a cap to vent air when filling the draw solution.

Lids were attached to both ends of the acrylic tube housing. The lid has tubing connections and is designed to have minimal dead volume. A tube can be attached to the lid so as to communicate with the inner space of the hollow fiber forward osmosis membrane via the tube connection.

(2) Production of Flat Forward Osmosis Membrane

A polysulfone flat membrane (produced by Sepro Membrane Co., Ltd., trade name "PS30", 210 mm × 297 mm, thickness 190 μm, UF membrane) was immersed in a first solution prepared in the same manner as above.

Thereafter, excess droplets on the surface of the flat membrane were removed to form a thin liquid film of the first solution on the surface of the flat membrane.

A second solution prepared in the same manner as described above was poured onto one side of the flat membrane and left to stand for 30 seconds to carry out interfacial polymerization. Interfacial polymerization was carried out at room temperature.

The membrane after interfacial polymerization was left standing in a constant temperature bath set at 50°C for 5 minutes to vaporize and remove the n-hexane, and both sides of the membrane were the washed with pure water to remove the polysulfone, whereby a flat forward osmosis membrane having a separation active layer composed of a polyamide on one side of the flat membrane was produced.

The obtained forward osmosis membrane was cut into a 100 mm × 100 mm rectangle and used in the following Examples.

(3) Preparation of Analysis Solution

(3-1) Preparation of Low Molecular Weight Dye Solution

As a model of a low molecular compound, Brilliant Blue R (molecular weight 825.97, CAS number 6104-59-2) was used as an aqueous solution with a concentration of 10 ppm to measure the recovery rate in the following Examples and Comparative Examples.

(3-2) Preparation of Analysis Solution for Concentration

Aqueous solutions having a concentration of 10 ppm and containing L-phenylalanine (Produced by Tokyo Chemical Industry Co., Ltd.), D-(+)-glucose (Produced by Tokyo Chemical Industry Co., Ltd.), or L-glutamine (Produced by Tokyo Chemical Industry Co., Ltd.) as analysis substances were used for evaluation of sensitivity improvement rate in the following Examples and Comparative Examples.

(4) Preparation of Draw Solution

As the draw solution in the following Examples and Comparative Examples, a magnesium chloride ($MgCl_2$) aqueous solution having a concentration of 10% by mass was used.

<<Example B-1>>

(1) Evaluation of Low Molecular Weight Dye Recovery Rate

A fluororubber tube having an inner diameter of 4 mm was connected to one end of a small hollow fiber forward osmosis membrane module so that the dead volume is as small as possible, and the inner space of the five hollow fiber forward osmosis membranes was filled with 1.75 ml of Brilliant Blue R aqueous solution. After filling, the opening of the tube was installed at a higher position than the small hollow fiber membrane module, and the end surface to which the tube was not connected was sealed to prevent liquid from leaking. The solution that did not enter the hollow fiber inner space was retained in the tube. The ratio Vr/M of Vr to the effective membrane area M ($m^2$) of the small hollow fiber forward osmosis membrane module when the amount of Brilliant Blue R aqueous solution is Vr (L) was 1.8 $L/m^2$.

In order to suppress volatilization of the water in the Brilliant Blue R aqueous solution while standing still, the draw solution inlet and air vent of the small hollow fiber forward osmosis membrane module and the end surface of the tube were sealed.

In this state, it was left standing at room temperature for 24 hours.

After 24 hours, the Brilliant Blue R aqueous solution in the inner space of the hollow fiber forward osmosis membrane was collected, and the recovery rate of the solute (Brilliant Blue R) was measured and evaluated based on the following criteria. The evaluation results of the low molecular weight dye recovery rate were "A".

A: When the solute recovery rate is 95% or more
B: When the solute recovery rate is 80% to less than 95%
C: When the solute recovery rate is less than 80%

(2) Volume Reduction Rate

The volume reduction rate was calculated according to the following formula:

Volume reduction rate (fold) = volume of analysis solution / volume of concentration analysis solution

(3) Evaluation of Sensitivity Improvement Rate

Fluororubber tubes each having a length of 80 mm and an inner diameter of 4 mm were connected to both ends of the small hollow fiber forward osmosis membrane module, and affixed with clamps with the open portions thereof facing upward. With this configuration, the liquid that does not enter the inner space of the hollow fiber forward osmosis membrane in the module is stored in the fluororubber tube, and when the amount of liquid in the module decreases as the concentration progresses, the module is replenished by the amount of the decrease.
The five hollow fiber forward osmosis membranes in the module were filled with 1.0 mL of an aqueous L-phenylalanine solution as an analysis solution.
The air vent hole of the small hollow fiber forward osmosis membrane module was opened, and after filling the draw solution from the draw solution inlet, the air vent hole was sealed. When filling the draw solution, operations were carried out to prevent air bubbles from entering the module.
With this device configuration, the increase in draw solution as concentration progresses can be tracked and measured using a graduated nylon tube connected to the draw solution inlet. Since the amount of increase in the draw solution matches the volume reduction of the analysis solution, by tracking the amount of increase in the draw solution, the volume reduction rate of the analysis solution can be known.
In this state, concentration was carried out at room temperature until the volume reduction rate increased 10-fold.
After concentration, the analysis solution collected from the inner space of the hollow fiber forward osmosis membrane was measured by liquid chromatography mass spectrometry (LC/MS). The sensitivity improvement rate derived from the following formula was calculated from the solute concentration in the analysis solution before and after concentration, and evaluated using the following criteria. The evaluation result of the sensitivity improvement rate in Example B-1 was "A".

Sensitivity improvement rate (fold) = solute concentration in analysis solution after concentration / solute concentration in analysis solution before concentration

A: When the sensitivity improvement rate is 8-fold or more
B: When the sensitivity improvement rate is 6-fold to less than 8-fold
C: When the sensitivity improvement rate is 2-fold to less than 6-fold
D: When the sensitivity improvement rate is less than 2-fold
E: When effective concentration cannot be achieved

Note that this sensitivity improvement rate should ideally match the volume reduction rate. However, during concentration of the analysis solution, solute loss may occur due to solute adhesion to the membrane, and solute passing through the forward osmosis membrane and dissipating into the draw solution.
The forward osmosis membrane of Example B-1 showed a sensitivity improvement rate of "A" with little solute loss during concentration of the analysis solution.

<<Example B-2 and B-3>>

Sensitivity improvement rate was evaluated in the same manner as in Example B-1, except that the analysis solutions listed in Table 4 were used instead of the aqueous L-phenylalanine solution.
The evaluation results are shown in Table 4.

<<Example B-4>>

(1) Evaluation of Low Molecular Weight Dye Recovery Rate

A circular hole having a diameter of 0.64 cm (area: 0.32 cm$^2$) was formed in an acrylic plate having a thickness of 1 mm, and an acrylic pipe having an outer diameter of 10 mm, an inner diameter of 8 mm, and a length of 70 mm was attached thereto. The obtained acrylic plate with the acrylic pipe is attached to the separation active layer forming surface of the flat forward osmosis membrane described above with adhesive to form a space to be filled with the analysis solution (effective membrane area M = 0.32 cm$^2$).

A schematic diagram of the resulting flat forward osmosis membrane plate structure is shown in FIG. 11.

A Brilliant Blue R aqueous solution was injected into the well of this flat forward osmosis membrane plate at a liquid volume of Vr = 0.058 ml (Vr/M = 1.8).

In this state, it was left standing at room temperature for 24 hours.

After 24 hours, the analysis solution in the inner space of the hollow fiber forward osmosis membrane was collected and evaluated in the same manner as in Example B-1. The evaluation result of the low molecular weight dye recovery rate of Example B-4 was "A."

(2) Evaluation of Sensitivity Improvement Rate

A flat forward osmosis membrane plate prepared in the same manner as above was arranged on a vat containing 50 mL of draw solution with the side to which the acrylic plate was attached facing up, and the draw solution contacts the inner space of the well through the flat forward osmosis membrane.

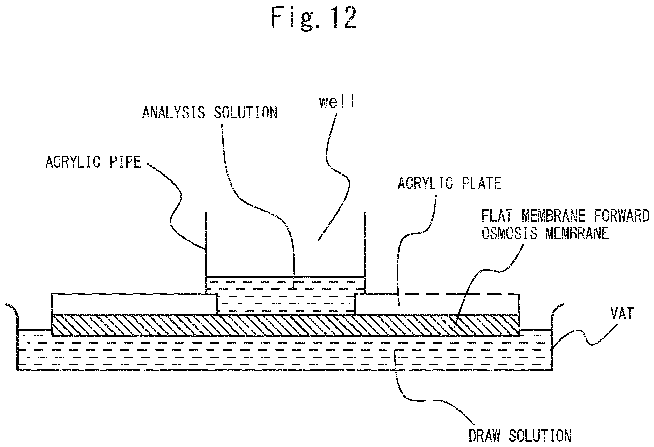

A schematic cross-sectional view of the configuration of the device produced here is shown in FIG. 12.

An L-phenylalanine aqueous solution was injected into the well of this flat forward osmosis membrane plate as an analysis solution at a liquid volume of Vr = 0.36 ml, and concentrated at room temperature until the volume reduction rate became 10-fold.

After the analysis solution collected from the concentration well was evaluated in the same manner as in Example B-1, the evaluation result of the sensitivity improvement rate in Example B-4 was "A".

<<Example B-5>>

The low molecular weight dye recovery rate and sensitivity improvement rate were evaluated in the same manner as in Example B-4, except that the amount of analysis solution (L-phenylalanine aqueous solution) injected into the well was 3.0 mL.

The evaluation results are shown in Table 4.

<<Example B-6 and Comparative Examples b-1 and b-2>>

The low molecular weight dye recovery rates and sensitivity improvement rates were evaluated in the same manner as in Example B-1, except that the amount of analysis solution (L-phenylalanine aqueous solution) injected into the inner space of the hollow fiber forward osmosis membrane was changed to the value listed in Table 4.

In Comparative Example b-1, since the amount of injected solution was small, the lids and fluororubber tubes at the ends of the small hollow fiber forward osmosis membrane module were removed, and each solution was directly injected into the inner space of the hollow fiber forward osmosis membrane using a micropipette.

In Comparative Example b-2, since the amount of solution to be injected was large, the fluororubber tubes at both ends of the small hollow fiber forward osmosis membrane module were connected to a bottle, allowing the solution that did not enter the module to be stored in the bottle.

The evaluation results are shown in Table 4.

<<Example B-7>>

Low molecular weight dye recovery rate and sensitivity improvement rate were evaluated in the same manner as in Example B-1, except that during interfacial polymerization for hollow fiber forward osmosis membrane production, a solution prepared using 2.5 g of m-phenylene diamine, 0.8 g of sodium lauryl sulfate, and 496.7 g of pure water was used as the first solution.

The evaluation results are shown in Table 4.

<<Comparative Example b-3>>

(2) Evaluation of sensitivity improvement rate

A syringe equipped with a hydrophilic PVDF syringe filter (effective membrane area M=2.8 cm$^2$) with an average pore diameter of 0.22 μm was filled with 5.0 ml of analysis solution (L-phenylalanine aqueous solution). The syringe was operated to discharge 4.5 mL of the fill liquid through the filter. When 0.5 mL of analysis solution remaining in the syringe was collected and the sensitivity improvement rate was evaluated in the same manner as in Example B-1, the evaluation result of the sensitivity improvement rate in Comparative Example B-3 was "D".

[Table 4]

Table 4

| | Forward osmosis membrane | | Solution amt Vf (mL) | Vf/M (L/m²) | Low molecular weight dye recovery rate | Sensitivity improvement rate | |
|---|---|---|---|---|---|---|---|
| | Shape | Membrane area (cm²) | | | | Solute | Eval |
| Ex B-1 | Hollow fiber | 9.73 | 1.0 | 1.03 | A | L-Phenylalanine | A |
| Ex B-2 | Hollow fiber | 9.73 | 1.0 | 1.03 | A | D-(+)-glucose | A |
| Ex B-3 | Hollow fiber | 9.73 | 1.0 | 1.03 | A | L-glutamine | A |
| Ex B-4 | Flat membrane | 0.32 | 0.36 | 11.25 | A | L-Phenylalanine | A |
| Ex B-5 | Flat membrane | 0.32 | 3.0 | 93.75 | A | L-Phenylalanine | B |
| Ex B-6 | Hollow fiber | 9.73 | 0.30 | 0.31 | A | L-Phenylalanine | B |
| Ex B-7 | Hollow fiber | 9.73 | 1.0 | 1.03 | B | L-Phenylalanine | C |
| Comp Ex b-1 | Hollow fiber | 9.73 | 0.003 | 0.003 | A | L-Phenylalanine | E |
| Comp Ex b-2 | Hollow fiber | 9.73 | 300 | 308.32 | A | L-Phenylalanine | E |
| Comp Ex b-3 | (Cylinder filter) | 2.80 | 5.0 | 17.86 | - | L-Phenylalanine | D |

DESCRIPTION OF REFERENCE SIGNS

100     forward osmosis membrane module
110     housing
111     lid
112     draw solution inlet
113     draw solution outlet
120     hollow fiber forward osmosis membrane
130     adhesive layer
131     end surface of adhesive layer
140     space formed by the end surface of the adhesive layer and the inner surface of the lid
200     concentration device
210     analysis solution tank
211     analysis solution feed pump
212     analysis solution feed piping
220     draw solution tank
221     draw solution feed pump
222     draw solution feed piping
a       analysis solution
b       concentration analysis solution
c       draw solution

**Claims**

1.  A concentration method for concentrating an analysis solution containing an analysis solute and an analysis solvent prior to analysis by means of an analysis device, wherein the concentration method is:

a concentration method by means of a forward osmosis method, in which the analysis solution and a draw solution are brought into contact with each other via a forward osmosis membrane, and the analysis solvent in the analysis solution is removed by passing through the forward osmosis membrane and moving into the drawing solvent, using a concentration device comprising a forward osmosis membrane module including a forward osmosis membrane, an analysis solution tank, an analysis solution feed piping, a draw solution tank, and a draw solution feed piping,

a total of a volume of an analysis solution passage part of the forward osmosis membrane module and a volume of the analysis solution feed piping is 500 mL or less, and

a concentration of the analysis solute in the analysis solution is 0.01 ppm or less, and the concentration of the analysis solute in the analysis solution after concentration is 0.02 ppm or more.

2. The concentration method according to claim 1, wherein an effective membrane area M of the forward osmosis membrane is 0.1 $cm^2$ to 0.20 $m^2$.

3. A concentration method for concentrating an analysis solution containing an analysis solute and an analysis solvent prior to analysis by means of an analysis device, wherein the concentration method is:

a concentration method by means of a forward osmosis method, in which the analysis solution and a draw solution are brought into contact with each other via a forward osmosis membrane, and the analysis solvent in the analysis solution is removed by passing through the forward osmosis membrane and moving into the drawing solvent,

The analysis solution is not recycled during concentration, and

an amount Vf of the analysis solution used in the concentration method is 0.01 mL to 50 mL.

4. The concentration method according to claim 3, wherein a ratio (Vf/M) of the amount Vf (L) of the analysis solution to the effective membrane area M ($m^2$) of the forward osmosis membrane is 0.01 $L/m^2$ to less than 200 $L/m^2$.

5. The concentration method according to claim 3, wherein the effective membrane area M of the forward osmosis membrane is 0.001 $cm^2$ to 500 $cm^2$.

6. The concentration method according to claim 3, wherein a viscosity of the analysis solution is less than 5,000 mPa·sec.

7. The concentration method according to claim 3, wherein in a state in which the forward osmosis membrane having an effective membrane area of M ($m^2$) is brought into contact with a Brilliant Blue R aqueous solution Vr (L) having a concentration of 10 ppm under the condition of Vr/M = 1.8 $L/m^2$, after standing at room temperature (25°C) for 24 hours, an amount of Brilliant Blue R contained in recovered Brilliant Blue R aqueous solution is 80% or more of the amount of Brilliant Blue R contained in the Brilliant Blue R aqueous solution prior to contact with the forward osmosis membrane.

8. The concentration method according to any one of claims 1 to 7, wherein the forward osmosis membrane is a membrane containing one or more selected from the group consisting of polyethersulfone, polysulfone, polyketone, polyetheretherketone, polyphenylene ether, polyvinylidene fluoride, polyacrylonitrile, polyethylene, polyimine, polyimide, polybenzoxazole, polybenzimidazole, sulfonated tetrafluoroethylene, cellulose acetate, and polyamide.

9. The concentration method according to any one of claims 1 to 7, wherein the forward osmosis membrane is a composite membrane comprising a porous support layer and a separation active layer on one or both sides of the porous support layer.

10. The concentration method according to claim 9, wherein the porous support layer has a porosity of 30% or more.

11. The concentration method according to claim 9, wherein the separation active layer is a layer containing a polyamide.

12. The concentration method according to any one of claims 1 to 7, wherein the forward osmosis membrane has a hollow fiber shape, a tubular shape, or a flat membrane shape.

13. The concentration method according to claim 12, wherein the hollow fiber or tubular forward osmosis membrane has an inner diameter of 20 μm to 5,000 μm.

**14.** The concentration method according to any one of claims 1 to 7, wherein the forward osmosis membrane has a hollow fiber or tubular shape, and has a separation active layer on the inner surface of the hollow fiber or tubular porous support layer.

**15.** The concentration method according to claim 14, wherein the analysis solution passes through or is arranged in an inner space of the hollow fiber or tubular forward osmosis membrane, and the draw solution passes through or is arranged outside the hollow fiber or tubular forward osmosis membrane.

**16.** The concentration method according to any one of claims 1 to 7, wherein the forward osmosis membrane has a flat membrane shape and has a separation active layer on one surface of the flat porous support layer.

**17.** The concentration method according to claim 16, wherein the analysis solution passes through or is arranged on the separation active layer side of the flat forward osmosis membrane, and the draw solution passes through or is arranged on the porous support layer side of the forward osmosis membrane.

**18.** The concentration method according to any one of claims 1 to 7, wherein the draw solution is a solution containing one or more selected from the group consisting of salts, organic acids, sugars, alcohols, glycols, organic polymers, and organic solvents.

**19.** The concentration method according to claim 1 or 2, wherein a sensitivity improvement rate represented by a ratio of the concentration of the analysis solute contained in the analysis solution after concentration to the concentration of the analysis solute contained in the analysis solution before concentration is 2.0 to less than 2,000-fold.

**20.** The concentration method according to any one of claims 3 to 7, wherein a sensitivity improvement rate represented by a ratio of the concentration of the analysis solute contained in the analysis solution after concentration to the concentration of the analysis solute contained in the analysis solution before concentration is 1.5 to less than 2,000-fold.

**21.** An analysis method, in which an analysis solution containing an analysis solute and an analysis solvent is concentrated by the concentration method according to any one of claims 1 to 7, and then subjected to instrumental analysis.

**22.** The analysis method according to claim 21, wherein the instrumental analysis is selected from the group consisting of liquid chromatography, gas chromatography, inductively coupled plasma analysis, atomic absorption spectrometry, and ion chromatography.

**23.** A concentration kit for carrying out the concentration method according to any one of claims 3 to 7, wherein

the concentration kit has a structure which enables the analysis solution and the draw solution to be brought into contact with each other via a forward osmosis membrane, whereby the analysis solvent in the analysis solution is removed by passing through the forward osmosis membrane and moving into the drawing solvent,
the concentration kit does not comprise a circulation means, and
the amount Vf of the analysis solution which can be filled into the concentration kit is 0.01 mL to 50 mL.

**24.** The concentration kit according to claim 23, wherein the forward osmosis membrane has a hollow fiber shape or a tubular shape, and
the analysis solution is arranged in the inner space of the hollow fiber or tubular forward osmosis membrane, and
the analysis solution-containing forward osmosis membrane is configured to be immersed in the draw solution.

**25.** The concentration kit according to claim 23, wherein the forward osmosis membrane has a flat membrane shape, and

has one or a plurality of partition structures for storing the analysis solution on one side of the flat forward osmosis membrane,
the analysis solution stored in the partition structure can contact one side of the flat forward osmosis membrane, and
the other surface of the flat forward osmosis membrane has a configuration which allows the draw solution to come into contact therewith.

EP 4 397 395 A1

# Fig.1

Fig. 2

# Fig. 3

| MIZORIBINE (µg/mL) | Peak area 280nm |
|---|---|
| 0 | ND |
| 0.01 | 563 |
| 0.02 | 1317 |
| 0.05 | 3564 |
| 0.1 | 7120 |
| 0.2 | 14149 |

$$y = 70792x$$
$$R^2 = 0.9999$$

# Fig. 4

| MIZORIBINE (µg/mL) | Peak area 280nm |
|---|---|
| 0 | ND |
| 0.01 | 555 |
| 0.02 | 1255 |
| 0.05 | 3691 |
| 0.1 | 7279 |
| 0.2 | 14722 |

$y = 73349x$

$R^2 = 0.9997$

# Fig. 5

| MIZORIBINE (µg/mL) | Peak area 280nm |
|---|---|
| 0 | ND |
| 0.01 | 670 |
| 0.02 | 1259 |
| 0.05 | 2965 |
| 0.1 | 6417 |
| 0.2 | 13010 |

DETECTION LOWER LIMIT =0.01µg/mL

$y = 64601x$
$R^2 = 0.9996$

EP 4 397 395 A1

# Fig. 6

| MIZORIBINE (μg/mL) | Peak area 280nm |
|---|---|
| 0 | ND |
| 0.01 | 670 |
| 0.02 | 1259 |
| 0.05 | 2965 |
| 0.1 | 6417 |
| 0.2 | 13010 |

DETECTION LOWER LIMIT
=0.01μg/mL

$y = 64601x$
$R^2 = 0.9996$

# Fig. 7

| MIZORIBINE (μg/mL) | Peak area 280nm |
|---|---|
| 0 | ND |
| 0.01 | 670 |
| 0.02 | 1259 |
| 0.05 | 2965 |
| 0.1 | 6417 |
| 0.2 | 13010 |

DETECTION LOWER LIMIT
=0.01μg/mL

$y = 64601x$
$R^2 = 0.9996$

# Fig. 8

| MIZORIBINE (μg/mL) | Peak area 280nm |
|---|---|
| 0 | ND |
| 0.01 | 670 |
| 0.02 | 1259 |
| 0.05 | 2965 |
| 0.1 | 6417 |
| 0.2 | 13010 |

DETECTION LOWER LIMIT =0.01μg/mL

$y = 64601x$
$R^2 = 0.9996$

# Fig. 9

| MIZORIBINE (μg/mL) | Peak area 280nm |
|---|---|
| 0 | ND |
| 0.05 | 284 |
| 0.1 | 765 |
| 0.5 | 3590 |

$$y = 7183.6x$$
$$R^2 = 0.9994$$

# Fig. 10

NYLON TUBE
(WITH SCALE)

HOLLOW FIBER FORWARD
OSMOSIS MEMBRANE

CAP

ADHESIVE

HOUSING

ADHESIVE

TUBE
CONNECTION
PART

LID

100mm

TUBE
CONNECTION
PART

LID

# Fig. 11

well

ACRYLIC PIPE

ACRYLIC PLATE

FLAT MEMBRANE FORWARD
OSMOSIS MEMBRANE

# Fig. 12

ANALYSIS SOLUTION

well

ACRYLIC PIPE

ACRYLIC PLATE

FLAT MEMBRANE FORWARD
OSMOSIS MEMBRANE

VAT

DRAW SOLUTION

## INTERNATIONAL SEARCH REPORT

| | International application No. |
| --- | --- |
| | **PCT/JP2022/032842** |

**A. CLASSIFICATION OF SUBJECT MATTER**

*B01D 61/00*(2006.01)i; *B01D 63/00*(2006.01)i; *B01D 63/02*(2006.01)i; *B01D 63/06*(2006.01)i; *B01D 69/00*(2006.01)i; *B01D 69/02*(2006.01)i; *B01D 69/04*(2006.01)i; *B01D 69/06*(2006.01)i; *B01D 69/08*(2006.01)i; *B01D 69/10*(2006.01)i; *B01D 69/12*(2006.01)i; *B01D 71/16*(2006.01)i; *B01D 71/34*(2006.01)i; *B01D 71/36*(2006.01)i; *B01D 71/38*(2006.01)i; *B01D 71/42*(2006.01)i; *B01D 71/52*(2006.01)i; *B01D 71/56*(2006.01)i; *B01D 71/58*(2006.01)i; *B01D 71/60*(2006.01)i; *B01D 71/62*(2006.01)i; *B01D 71/64*(2006.01)i; *B01D 71/68*(2006.01)i; *B01D 71/72*(2006.01)i; *B01D 71/76*(2006.01)i; *B01D 71/82*(2006.01)i; *G01N 1/10*(2006.01)i; *G01N 1/40*(2006.01)i; *G01N 30/06*(2006.01)i

FI: B01D61/00 500; B01D69/12; B01D71/16; B01D71/34; B01D71/36; B01D71/56; B01D71/68; B01D71/42; B01D71/64; B01D71/62; B01D69/04; B01D69/06; B01D69/08; B01D71/38; B01D69/10; B01D63/02; B01D63/00 500; G01N1/10 B; B01D69/02; B01D71/52; B01D71/58; B01D71/76; B01D63/06; B01D69/00; B01D71/60; B01D71/72; B01D71/82 500; G01N30/06 Z; G01N1/40

According to International Patent Classification (IPC) or to both national classification and IPC

**B. FIELDS SEARCHED**

Minimum documentation searched (classification system followed by classification symbols)

B01D61/00; B01D63/00; B01D63/02; B01D63/06; B01D69/00; B01D69/02; B01D69/04; B01D69/06; B01D69/08; B01D69/10; B01D69/12; B01D71/16; B01D71/34; B01D71/36; B01D71/38; B01D71/42; B01D71/52; B01D71/56; B01D71/58; B01D71/60; B01D71/62; B01D71/64; B01D71/68; B01D71/72; B01D71/76; B01D71/82; G01N1/10; G01N1/40; G01N30/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2018-1150 A (KRI INC) 11 January 2018 (2018-01-11) claims 1-4, paragraph [0050], fig. 2 | 3, 12, 18, 21-22 |
| Y | JP 2009-92564 A (KURITA WATER IND LTD) 30 April 2009 (2009-04-30) claim 1 | 3, 12, 18, 21-22 |
| A | JP 2020-196007 A (ASAHI KASEI CORP) 10 December 2020 (2020-12-10) entire text | 1-25 |

| ✓ Further documents are listed in the continuation of Box C. | | ✓ See patent family annex. |
| --- | --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **28 September 2022** | **25 October 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2022/032842**

**C.** **DOCUMENTS CONSIDERED TO BE RELEVANT**

| Category* | Citation of document, with indication, where appropriate, of the relevant passages | Relevant to claim No. |
|---|---|---|
| A | WO 2020/241865 A1 (ASAHI KASEI CORP) 03 December 2020 (2020-12-03) <br> entire text | 1-25 |

Form PCT/ISA/210 (second sheet) (January 2015)

INTERNATIONAL SEARCH REPORT
Information on patent family members

International application No.

**PCT/JP2022/032842**

| Patent document cited in search report | | | Publication date (day/month/year) | Patent family member(s) | | | Publication date (day/month/year) |
|---|---|---|---|---|---|---|---|
| JP | 2018-1150 | A | 11 January 2018 | (Family: none) | | | |
| JP | 2009-92564 | A | 30 April 2009 | (Family: none) | | | |
| JP | 2020-196007 | A | 10 December 2020 | (Family: none) | | | |
| WO | 2020/241865 | A1 | 03 December 2020 | EP | 3978103 | A1 | |
| | | | | CN | 113905806 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013170977 A
- JP 2004077299 A
- JP 2009092564 A

**Non-patent literature cited in the description**

- *CHEMICAL ABSTRACTS,* 6104-59-2